(19) Europäisches Patentamt
European Patent Office
Office européen des brevets

(11) **EP 2 380 775 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **11162166.0**

(22) Anmeldetag: **13.04.2011**

(51) Int Cl.:
*B60Q 1/56* *(2006.01)*     *C09K 11/02* *(2006.01)*
*H05B 33/06* *(2006.01)*     *H05B 33/14* *(2006.01)*
*H05B 33/26* *(2006.01)*     *H05B 33/28* *(2006.01)*
*C09K 11/56* *(2006.01)*

(54) **OPTISCH DURCHGÄNGIGE, TIEFZIEHFÄHIGE ELEKTRODE UND DIESE ENTHALTENDES FLÄCHENELEMENT FÜR EL-FOLIEN/-LAMPEN**

OPTICALLY PERMEABLE, DEEP DRAWABLE ELECTRODE AND FLAT ELEMENT COMPRISING SAME FOR EL FILMS/LAMPS

ELECTRODE PASSANTE OPTIQUE APTE À L'EMBOUTISSAGE PROFOND ET ÉLÉMENT DE SURFACE COMPRENANT CELLE-CI POUR LAMPES/FEUILLES EL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2010 DE 102010028206**

(43) Veröffentlichungstag der Anmeldung:
**26.10.2011 Patentblatt 2011/43**

(73) Patentinhaber: **tesa SE**
**22848 Norderstedt (DE)**

(72) Erfinder:
• **Klier, Daniel**
**21465, Reinbek (DE)**
• **Kupsky, Marco**
**25451, Quickborn (DE)**

(56) Entgegenhaltungen:
WO-A1-97/48254     WO-A1-2005/062679
CN-A- 101 540 371     DE-A1- 10 112 328
DE-A1- 10 247 708     GB-A- 1 315 293
KR-B1- 940 007 589     US-A- 3 348 056
US-A- 3 571 654     US-A1- 2009 085 466

Bemerkungen:
Die Akte enthält technische Angaben, die nach dem Eingang der Anmeldung eingereicht wurden und die nicht in dieser Patentschrift enthalten sind.

EP 2 380 775 B1

**Beschreibung**

Die Erfindung betrifft plastisch verformbare elektrolumineszierende Flächenelemente mit einer flächigen, zumindest teilweise transparenten und tiefziehfähigen Elektrode, die ein flächiges Element mit einem elektrisch leitenden Material umfasst.

Bislang werden Elektroden in vielen technischen Bereichen eingesetzt, um entweder einen Stromfluss in verschiedensten Materialen oder um den Aufbau eines elektrischen Feldes in verschiedensten Materialien zu ermöglichen. Dazu werden mindestens zwei Elektroden an eine Spannungsquelle angeschossen. Im einfachsten Fall können diese Elektroden aus zwei einfachen Metalldrähten bestehen.

Besonders anspruchsvoll ist die Aufgabe, Elektroden bereitzustellen, die gleichzeitig transparent und flächig ausgedehnt sind. Bisher werden derartige flächige und transparente Elektroden durch dünne Schichten aus organischen leitfähigen Polymeren, wie Polythiophenderivaten, öder anorganischen leitfähigen Beschichtungen, wie ITO (Indiumzinnoxid), hergestellt. Alle diese dem Fachmann bekannten Beschichtungen haben aufgrund ihrer Brüchigkeit eine unzureichende Flexibilität, einen hohen Preis, einen hohen Widerstand und sind nur zusammen mit einem Trägermaterial verfügbar und bearbeitbar. Insbesondere die mangelnde chemische und thermische Stabilität dieser Beschichtungen stellen eine besonders starke Einschränkung bei ihrer Anwendung dar. Die unzureichende Resistenz von leitfähigen Beschichtungen wie ITO im Verbund mit anderen organischen Materialien, die Restmonomere und/oder Restlösungsmittel enthalten, ist dem Fachmann ausreichend bekannt. All diese flächigen und transparenten Elektroden eignen sich aufgrund ihrer Brüchigkeit nicht für eine Anwendung, die einen Prägeprozess oder einen Tiefziehprozess beinhalten, wie beispielsweise bei der Herstellung von Kennzeichenschildern für Kraftfahrzeuge. Beispielsweise ist aus der DE 10 2006 045 514 A1 eine transparente und geträgerte Flächenelektrode aus einem bogen- oder wellenförmigen Gitternetz auf einem Substrat zur flächigen Verklebung auf einer starren Scheibe bekannt.

Herkömmliche Kennzeichenschilder für Kraftfahrzeuge werden aus einem Blechrohling hergestellt, der mit einer reflektierenden Schicht versehen ist und geprägt wird, um die entsprechende Individualisierung mittels einer Buchstaben- und/oder Nummernkombinationen zu ermöglichen. Nach dem Prägen werden die Blechrohlinge einem Heißwalzfärbeverfahren zum Einfärben der geprägten Buchstaben- und/oder Nummernkombinationen unterzogen. Gegebenenfalls wird auf die fertigen Schilder eine transparente Schutzschicht aufgebracht.

Nachteilig ist, dass zur guten Erkennbarkeit der Buchstaben- und Nummernkombinationen in der Dunkelheit in unmittelbarer Nähe des Kennzeichenschildes am Fahrzeug eine Lichtquelle angeordnet werden muss, die das Schild beleuchtet, damit die einfallenden Lichtstrahlen reflektiert werden können.

Aus der DE 198 27 477 A1 ist ein Kennzeichenschild für ein Kraftfahrzeug bekannt, welches als aktive Beleuchtung eine zumindest im Bereich der Kennzeichnung angeordnete, elektrisch aktivierbare Leuchtfolienanordnung vorsieht, die die Kennzeichnung und/oder die Schildfläche hinterlegt. Das in der DE 200 22 563 U vorgeschlagene Kennzeichenschild entwickelt die Elektrolumineszenz-Folienanordnung weiter. Die dort offenbarten Elektrolumineszenz-Folienanordnungen lassen jedoch eine Prägung von Motiven oder Symbolen, insbesondere Buchstaben- und/oder Nummernkombinationen, nicht zu.

Sogenannte Elektolumineszenz-Lampen (EL-Lampen) bestehen aus einer unteren Elektrode, einer Leuchtschicht aus Matrix und Leuchtpartikeln, einem Dielektrikum und einer oberen Elektrode. Die einzelnen Schichten werden üblicherweise sukzessive im Siebdruck aufeinander aufgebaut. Für den Druck kommen handelsübliche Pasten zum Einsatz. Die bekannten Pasten haben den Nachteil, dass die aufgetragene Schicht nach dem Drucken und Trocknen extrem spröde und brüchig ist und bei Luftfeuchtigkeit die Verbundfestigkeit verliert.

In einem Tiefziehprozess, wie er beispielsweise für die Prägung von KFZ-Nummernschildern nötig ist, wird der Verbund der Schichten daher zerstört und die herkömmlichen Elektroden beziehungsweise deren leitfähige Beschichtungen brechen, so dass nicht leuchtende Areale entstehen.

Ein verformbares, beziehungsweise prägefähiges Schild, insbesondere ein Kennzeichen für Kraftfahrzeuge mit einem Elektrolumineszenz-Aufbau, ist aus der DE 102 47 708 B4 bekannt. Dort besteht der Grundkörper aus einem elektrisch leitfähigen Material, beispielsweise Aluminium, oder weist direkt oder indirekt darüber eine weitere elektrisch leitfähige Schicht auf. Der elektrisch leitfähige Grundkörper beziehungsweise seine elektrisch leitfähige Beschichtung bilden somit eine erste Elektrode eines Flachkondensators. Auf dem elektrisch leitenden Grundkörper beziehungsweise seiner elektrisch leitfähigen Beschichtung ist eine Schicht mit einer elektrolumineszierenden Pigmentierung aufgebracht. Hierfür eignen sich verschiedene Pigmente, zum Beispiel auf Basis von dotiertem ZnS, ZnSe, ZnS/CdS, die unter Einwirkung eines elektrischen Wechselspannungsfeldes lumineszieren. Die Lumineszenz tritt dabei nur so lange auf, wie die Erregung durch das Wechselspannungsfeld vorhanden ist. Die elektrolumineszierende Schicht kann durch verschiedene Verfahren, beispielsweise Aufspritzen, Aufstreichen oder spezielle Siebdruckverfahren aufgebracht werden. Zum Aufbau des elektrischen Feldes ist es erforderlich, dass auf der elektrolumineszierenden Schicht eine transparente elektrisch leitfähige Schicht aufgebracht wird, welche die zweite Elektrode des Flachkondensators bildet. Angaben zur Beschaffenheit der transparenten elektrisch leitfähigen Schicht macht das Dokument nicht.

Die WO 2005/062679 A1 beschreibt einen flexiblen Frontelektrodenfilm, umfassend: einen transparenten Polymerfilm mit einer vorbestimmten Dicke und einer vorbestimmten Zugfestigkeit und Elastizität, der UV-Strahlen blockiert. Hierzu wird ein Maschentyp durch Drucken eines leitfähigen, Materials in einem Gittermuster auf dem transparenten Polymerfilm gebildet. Eine Prägung findet nicht statt.

Die WO 97/48254 A1 zeigt eine flexible, durchscheinende elektrisch leitende Elektrode aus einer flexiblen, lichtdurchlässigen Kunststofffolie oder einem Gewebe, das eine Vielzahl von dicht beabstandeten schmalen Öffnungen enthält, die sich durch die Dicke erstrecken. Eine Prägung findet nicht statt.

Davon ausgehend ist es die Aufgabe der Erfindung, ein tiefziehfähiges elektrolumineszierendes Flächenelement mit einer transparenten, flächigen Elektrode bereitzustellen, die einen niedrigen elektrischen Widerstand und zugleich eine hohe Flexibilität aufweist, kostengünstig herstellbar ist und eine hohe chemische Widerstandsfähigkeit besitzt. Insbesondere soll sie ohne einen zusätzlichen Träger von Rolle zu Rolle verarbeitet werden können.

Völlig überraschend kann die Aufgabe der Erfindung durch ein Flächenelement mit einer flächigen, zumindest teilweise transparenten und tiefziehfähigen, insbesondere trägerlosen, Elektrode gelöst werden, die ein flächiges Element umfasst mit einem elektrisch leitenden, insbesondere Metall enthaltenden Material, und das elektrisch leitende Material bei Raumtemperatur, das heißt bei 20 bis 25 °C, bevorzugt bei 20 °C, eine Reißdehnung oder synonym Bruchdehnung, insbesondere nach DIN EN ISO 6892-1, Punkt 3.4.2, zwischen 1 und 70 % oder auch über 70 % und eine Zugfestigkeit zwischen 5. bis 2500 N/mm$^2$, insbesondere nach DIN EN 6891-1, aufweist und das flächige Element ein flächiges Gitternetz mit mindestens einem elektrisch leitenden Filament des Materials ist. Gemäß einer besonders bevorzugten Ausführungsform der vorliegenden Erfindung umfasst die Elektrode zusätzlich zu den vorstehend oder nachstehend genannten Merkmalen zwei Mittel zur Kontaktierung, beispielsweise Metallkontakte oder Kontaktierungsstellen.

Unter Transparenz ist erfindungsgemäß eine flächige optische Durchgängigkeit zu verstehen, das die Elektrode bildende Material selbst muss nicht transparent sein.

Die genannten Zugfestigkeiten der elektrisch leitenden Materialien, beispielsweise der nachfolgend genannten Metalle oder Legierungen, insbesondere als Rohmaterialien, wird nach DIN ISO 6892-1 ermittelt, wobei die Zugfestigkeit der Höchstkraft entsprechend DIN EN ISO 6892-1 Punkt 3.9 und Punkt 3.10.1 entsprechen kann. Die Messung erfolgt gemäß dem Verfahren in Punkt 6.2-c (Draht-Stäbe-Profile kleiner < 4mm), Verfahren A (Prüfgeschwindigkeit basierend auf Dehngeschwindigkeitsregelung nach Punkt 10.3). Auf den Offenbarungsgehalt der DIN EN ISO 6892-1 sowie aller weiterer genannten DIN wird vollständig Bezug genommen und ihr Inhalt zum Inhalt dieses Dokumentes gemacht.

Die Reißdehnung oder synonym die Bruchdehnung des Materials, des flächigen Gitternetzes sollten möglichst hoch sein, um eine schadlose Verformbarkeit der Elektrode, insbesondere des Gewebes, beim Prägeprozess zu ermöglichen.

Daher ist es bevorzugt, wenn die Reißdehnung des Material zwischen 3 bis 70 %, insbesondere zwischen 10 bis 70 %, besonders bevorzugt zwischen 12 bis 70 %, oder noch besser zwischen 18 bis 70 % liegt und es eine Zugfestigkeit zwischen 5 bis 2100 N/mm$^2$, insbesondere zwischen 12 bis 2100 N/mm$^2$, besser zwischen 50 bis 2100 N/mm$^2$, besonders bevorzugt zwischen 40 bis 2000 N/mm$^2$, aufweist. Auch Materialien mit Zugfestigkeiten zwischen 45 bis 560 N/mm$^2$ sind besonders bevorzugt. Typische bevorzugte Materialien weisen vorzugsweise Werte zwischen 40 MPa und 1300 MPa auf (70 N/mm$^2$ bis 2000 N/mm$^2$). So können bevorzugte Materialien, wie Aluminium enthaltenden Legierungen oder Stähle, Zugfestigkeiten von 16 bis 600 N/mm$^2$ bei einer Reißdehnung von 16 bis 50 % aufweisen. Auch Kupfer ist bevorzugt und kann je nach Verarbeitung eine Zugfestigkeit von 200 bis 400 N/mm$^2$ bei den genannten Reißdehnungen aufweisen. Zu den genannten Materialien zählen eine Reihe von Metallen und deren Legierungen. Die Zugfestigkeit beschreibt den Kraftaufwand der nötig ist, um eine bestimmte Verformung zu erreichen. Je niedriger der Kraftaufwand ist, desto besser ist das Metallgewebe für die Verformbarkeit geeignet. Erfindungsgemäß weisen die Materialien der Gewebe, ob als Metallgewebe oder auch als Gewebe polymerer metallbeschichteter Drähte, daher die vorgenannten duktilen Eigenschaften auf.

Als Materialien kommen beispielsweise Aluminium oder auch Legierungen des Aluminiums mit einem Gehalt an Magnesium in Betracht. Bevorzugte Aluminium enthaltende Legierungen weisen Zugfestigkeiten von 60 bis 400 N/mm$^2$ bei einer Bruchdehnung von 20 bis 40 % in Abhängigkeit von der Zusammensetzung auf. Weitere geeignete Legierungen können Legierungszusätze, die die Festigkeit beeinflussen, enthalten, dies sind beispielsweise neben Magnesium auch Zink, Silizium oder Mangan. Dabei weiß der Fachmann, dass auch die Verarbeitung der Metalle oder der Legierungen deren Materialeigenschaften beeinflusst. Generell sind daher Materialien bevorzugt, deren Reißdehnung im Bereich zwischen 10 bis 70 % und/oder deren Zugfestigkeit zwischen 50 bis 2100 N/mm$^2$ oder im Bereich auch zwischen 12 bis 1000 N/mm$^2$ liegt, besonders vorzugsweise liegt die Reißdehnung im Bereich zwischen 15 bis 55 % und/oder die Zugfestigkeit zwischen 12 bis 1000 N/mm$^2$.

Ferner ist es bevorzugt, wenn die Reißdehnung und der Zug-Elastizitätsmodul des flächigen Gitternetzes bei einer Dehngeschwindigkeit von 300 mm/min und einer Temperatur von 23 °C eine Reißdehnung von mehr als 20 % aufweist, insbesondere von mehr als 50 % oder sogar von mehr als 100 %, und außerdem ein Zug-Elastizitätsmodul von weniger als 1000 MPa oder sogar von höchstens 100 MPa besitzt.

Ebenfalls Teil der Erfindung umfassend das beschriebene Flächenelement ist eine flächige, zumindest teilweise transparente, tiefziehfähige Elektrode, die ein flächiges Element mit einem elektrisch leitenden Material umfasst, wobei das elektrisch leitende Material des Elements aus mindestens einem Metall, einer Legierung oder gegebenenfalls aus einem elektrisch leitfähigen Polymer ist und das flächige Element ein flächiges Gitternetz eines tiefziehfähigen Gewebes mit einer glatten Bindung, Körperbindung oder Leinwandbindung, insbesondere gemäß DIN-ISO 9044:2001-09, Punkt 3, mit mindestens einem elektrisch leitenden Filament des Materials umfasst. Erfindungsgemäß ist die tiefziehfähige Elektrode ein Metalldrahtgewebe wie nachfolgend definiert, oder ein Gewebe mit polymeren Filamenten, die Filamente zumindest teilweise mit einer elektrisch leitenden Beschichtung versehen sind. Gegenstand der Erfindung ist auch die Verwendung des genannten Gewebes als Elektrode für ein Flächenelement oder ein elektrolumineszierende Kennzeichenschild wie nachstehend detailliert dargelegt.

Eine derartige Elektrode ist hochverformbar und ist somit auch tiefziehfähig oder prägbar, ohne ihre Funktionalität zu vermindern. Dies beruht auf der speziellen Kombination des Materials und der speziellen Ausbildung des flächigen Elements. So muss das Material, insbesondere das Metall, das elektrisch leitfähige Polymer oder die Legierung, eine besonders hohe Reißdehnung und gleichzeitig eine typische Zugfestigkeit aufweisen. Infolge der Zugfestigkeit ist das Material hinreichend nachgiebig. Gleichzeitig muss es aber auch eine hohe Reißdehnung aufweisen, um insgesamt zerstörungsfrei verformbar zu sein. Nur Materialien, in denen die beiden erfindungsgemäßen Merkmale zugleich realisiert sind, sind in ausreichendem Maß verformbar, um sich ohne Einschränkung der Funktionalität tiefziehen oder prägen zu lassen und diese Eigenschaft auch nicht in einem Flächenelement mit Schichtaufbau einzubüßen.

Die Elektrode kann als flächiges Element in Form eines Gitternetzes auf eine Transferfolie aufgedruckt werden und später mit der Leuchtschicht flächig verbunden werden. Anschließend kann die Transferfolie entfernt werden und gegebenenfalls durch eine isolierend wirkende Schicht ersetzt werden.

Das flächige Element der tiefziehfähigen Elektrode ist ein Gitternetz, insbesondere mit zwei Metallkontakten oder Kontaktierungsstellen. Als ein Gitternetz wird ein Netz aus Filamenten verstanden, die sich in der Regel im gleichen Abstand und in der Regel im Wesentlichen rechtwinklig kreuzen beziehungsweise schneiden. Erfindungsgemäß sind die Filamente im Wesentlichen gerade, parallel zu einander angeordnet und kreuzen beziehungsweise schneiden sich im Wesentlichen rechtwinklig, insbesondere mit weiteren gerade, parallel zu einander angeordneten Filamenten des Gitternetzes. Folglich sind die Filamente besonders bevorzugt entsprechend der Kette (alle parallel zur Webrichtung verlaufenden Drähte eines Drahtgewebes) und des Schusses (alle rechtwinklig zur Webrichtung verlaufenden Drähte eines Drahtgewebes) angeordnet (DIN ISO 9044:2001-09, 3. Begriffe). Als Webart kommen generell alle dem Fachmann bekannten Webarten für Gewebe oder Gitternetze in Betracht, wobei die glatte Bindung oder Körperbindung gemäß der Offenbarung in 3.8 der vorgenannten DIN-Norm, insbesondere mit Quadratmaschenform, bevorzugt sind. Die glatte Bindung wird auch bezeichnet als "Leinwandbindung" oder "Form A". Der gesamte Offenbarungsgehalt der DIN 9044:2001-09 wird zum Inhalt dieser Erfindung gemacht. Der Draht- oder Filamentdurchmesser (d) wird vorzugsweise entsprechend der DIN ISO 4782 gemessen. Dem Fachmann ist klar, dass die Filamente auch in unregelmäßigen oder mit definierten, abweichenden Abständen und/oder im stumpfen und/oder spitzen Winkel angeordnet sein können. Weitere mögliche Anordnungen der Filamente, insbesondere die Maschenformen, können neben Quadratmaschen auch Rechteckmaschen, auch bezeichnet als Lang- oder Breitmaschen, sein. Sofern sinnvoll kann jegliche Anordnung gewählt werden, insbesondere, wenn dadurch die elektrisch leitende Schicht flexibler wird, das heißt, unabhängiger von der Bruchdehnung und/oder der Zugfestigkeit des elektrisch leitenden Materials. Die Bestimmung der Reißdehnung und der Zugfestigkeit erfolgt an den zur Herstellung der flächigen Filamente, bevorzugt des Gitternetzes, verwendeten Materialien gemäß DIN ISO 6892-1 wie vorstehend erläutert.

Erfindungsgemäß ist die flächige, transparente Elektrode ein Metalldrahtgewebe, insbesondere aus Stahl, wie beispielsweise 1.4401 oder 1.4301 Stahl. Die Gewebe wurden für die nachstehenden Versuche von den Firmen Wolfgang-H Schulz GmbH, Mechernich-Vussem oder Haver & Boecker, Oelde angefertigt. Durch Verwendung von ausreichend dünnen Drähten in den Metallgeweben kann eine hohe Transparenz bei geringer Maschenweite erzielt werden, insbesondere bei Geweben gemäß einer Anordnung der Filamente, wie sie in der DIN 9044:2001-09 offenbart ist. Als Material der Metallgewebe eignen sich generell alle leitfähigen Metalle und deren Legierungen, wie beispielsweise Aluminium, Kupfer, Eisen, Silber, Gold, Zink, Wolfram, Chrom, Blei, Titan, Nickel, Platin und Gadolinium. Eine bevorzugte Legierung ist neben Eisen, Kupfer und/oder Aluminium haltigen Legierungen auch Nitinol.

Besonders vorteilhaft sind Metalldrahtgewebe aus Metallen oder Legierungen, die eine hohe Duktilität aufweisen. Stahl kann sich bis zu 25 % plastisch verformen, bevor er reißt. Bei Gold ist die Duktilität um ein Vielfaches größer. Der Vorteil duktiler Werkstoffe besteht darin, dass eine gute kalte Verformbarkeit gegeben ist, was sich in einer hervorragenden Biegefähigkeit und Tiefziehfähigkeit äußert. Ferner weisen viele Metalle eine hohe Reflexion auf, dies wirkt sich positiv bei der Lichtdurchlässigkeit der Elektrode aus, da das Material nur einen geringen Anteil des Lichtes absorbiert. Materialien, die keine hohe Reflexion aufweisen werden daher bevorzugt mit stark regulär und/oder diffus reflektierenden Beschichtungen versehen, beispielsweise mit Nanopartikeln.

Ein weiterer Vorteil der flächigen, transparenten Elektroden aus Metalldrahtgeweben ist, dass sie trägerlos hergestellt, gelagert und verarbeitet werden können, insbesondere können sie von Rolle zu Rolle verarbeitet werden.

Besonders geeignete transparente Elektroden weisen zusätzlich zu den vorgenannten Merkmalen eine Transmission von 5 bis 92 % im Bereich des UV/Vis-Spektralbereichs auf, insbesondere von 20 bis 85 %, vorzugsweise von 40 bis 85 %, bevorzugt von 50 bis 85 %, besonders bevorzugt von 50 bis 80 % oder auch von 50 bis 75 %. Alternative zweckmäßige Bereiche können bei 5 bis 80 % im Bereich des UV/Vis-Spektralbereichs liegen, insbesondere von 10 bis 60 %, besser von 15 bis 55 %, vorzugsweise von 30 bis 55 %, bevorzugt von 20 bis 55 %, besonders bevorzugt von 25 bis 55 %. Hohe Werte bei der Transmission erhöhen die Leuchtdichte von elektrolumineszierenden Lampen mit diesen Elektroden.

Als besonders vorteilhafte, transparente und tiefziehfähige Elektroden haben sich jene herausgestellt, deren flächiges Element ein Gitternetz eines elektrisch leitenden Gewebes umfasst, beispielsweise ein elektrisch leitendes gewebtes Gitter oder ein aufdruckbares elektrisch leitendes Gitter mit im Wesentlichen regelmäßig parallel und/oder rechtwinklig, insbesondere mit einer Bindung der Filamente gemäß DIN 9044:2001-09, 3.8, oder meanderförmig angeordneten, elektrisch leitendenden Filamenten.

Erfindungsgemäß ist die transparente Elektrode ein elektrisch leitendes Gewebe aus einem vorgenannten Metall oder einer entsprechenden Legierung insbesondere gemäß DIN 9044:2001-09. In diesem Fall ist das flächige Gitternetz ein Metalldrahtgewebe aus einem Metall oder einer entsprechenden Metall enthaltenden Legierung, insbesondere mit einer vorgenannten Reißdehnung und Zugfestigkeit. Die Filamente sind bevorzugt in dem Metalldrahtgewebe gerade parallel und rechtwinklig zueinander angeordnet, insbesondere gemäß DIN 9044:2001-09, 3.8. Ein alternatives besonders bevorzugtes Gewebe ist ein polymeres Gewebe, das zumindest teilweise mit Metallen oder einer Legierung beschichtet ist oder das polymere Gewebe mindestens ein metallisches Filament umfasst. In jedem Fall weisen die Elektroden eine ein- oder zweidimensionale elektrische Leitfähigkeit auf. Vorzugsweise verfügt die Elektrode zusätzlich zu den vorstehend oder nachstehend genannten Merkmalen über zwei Metallkontakte oder Kontaktierungsstellen.

Alternativ oder zusätzlich zu den vorgenannten Merkmalen hat es sich als besonders vorteilhaft herausgestellt, wenn das Gitternetz ein Gewebe mit Metall enthaltenden, elektrisch leitenden Drähten umfasst, die aus mindestens einem Metall oder einer Legierung sind, wie Metalldrahtgewebe, oder ein Gewebe mit polymeren Filamenten und die Filamente zumindest teilweise mit einer elektrisch leitenden Beschichtung versehen sind, die mindestens ein Metall, eine elektrisch leitende Legierung oder eine elektrisch leitende Polymermasse, wie Polyanilin, 1,3-diethylendioxide Derivate des Imidazolins oder EOlml-2,2, gegebenenfalls mit mindestens einem elektrisch leitenden Füllstoff, umfasst, wobei der Füllstoff ausgewählt sein kann aus der Gruppe Metallpartikel, umfassend Silber, Gold, Platin oder Aluminium und deren Legierungen oder Graphit, Kohlenstoff-Nanoteilchen, Kohlenstoff-Nanoröhren, Ruß, Leitruß, Fullerene, Fulleren-Derivate und Acetylen-Ruß. Vorzugsweise erfüllt die elektrisch leitende Polymermasse ebenfalls die Anforderungen an die Reißdehnung und/oder Zugfestigkeit der erfindungsgemäßen elektrisch leitenden Materialien, das heißt, sie liegen vorzugsweise etwa im gleichen Bereich der genannten Werte. Vorzugsweise decken die elektrisch leitenden Polymere ebenfalls mindestens den Bereich der Reißdehnung der genannten metallischen Materialien ab, das heißt, die Polymere sind mindestens so elastisch wie die metallischen elektrisch leitfähigen Materialien.

Ferner ist es bevorzugt, wenn die flächige, transparente Elektrode, insbesondere mit zwei Metallkontakten oder Kontaktierungsstellen, die vorgenannten Reißdehnung und Zugfestigkeit aufweist und insbesondere zugleich einen Flächenwiderstand von unter 300 Ω, wie beispielsweise zwischen 0,001 bis 300 Ω, besser zwischen 0,0005 bis 300 Ω, bevorzugt zwischen 0,0001 Ω bis 300 Ω. Bevorzugt liegt der Flächenwiderstand unter 100 Ω, besonders bevorzugt unter 50 Ω, wobei noch bevorzugter ein Flächenwiderstand von unter 1,0 Ω, insbesondere unter 0,2 Ω, besonders bevorzugt unter 0,01 Ω, und insbesondere im Bereich bis 0,0005 Ω, bevorzugt bis 0,001 Ω. Generell sollen alle Werte des Flächenwiderstands zwischen 300 Ω bis 0 Ω als offenbart gelten. Diese Werte für den Flächenwiderstand gelten vorzugsweise sowohl für die auf metallischen und/oder auf polymeren Materialien basierenden Elektroden. Alternativ liegt der Widerstand der Elektrode in mindestens eine Richtung unter 15 Ω, besser unter 10 bis 15 Ω. Der Flächenwiderstand berechnet sich nach R□ = p/d, wobei beispielsweise p(Stahl) = 1,5 $10^{-7}$ Ω·m oder p(Graphit) = 8· $10^{-6}$ Ω·m sind.

Ebenfalls können alternativ zu den genannten Metallgittern auch Gitternetze als Gewebe mit polymeren Filamenten beziehungsweise Drähten organischer Polymere eingesetzt werden. Als organische Polymere zur Herstellung von Geweben organischer Polymere eigenen sich besonders hervorragend PTFE (Teflon), PET (Polyethylenterephtahtlate), PA (Polyamid), PE (Polyethylen), Parylene, PP (Polypropylen), PC (Polycarbonat), PEEK (Polyetheretherketon) , PI (Polyimid), ETFE (Ethylentetrafluorethylen), ABS (Acrylnitril-Butadien-Styrol), CA (Celluloseacetat), EPDM (Ethylen-Propylen-Dien-Kautschuk), EVA beziehungsweise EVM (Ethylenvinylacetat), FEP (Perfluor (Ethylen-Propylen) Kunststoff), FKM beziehungsweise FPM (Fluor-Polymer-Kautschuk), NBR (Acrylnitril-Butadienkautschuk), PAEK (Polyaryletherketon), PAN (Polyacrylnitril), PBT (Polybutylenterephthalat), PCTFE (Polychlortrifluorethylen), PEN (Polyethylennaphthalat), PEK (Polyetherketon), PES (Polyethersulfon), POM (Polyoxymethylen, Polyacetal), PIB (Polyisobuten), PMMA (Polymethylmethacrylat), PS (Polystyrol), PUR (Polyurethan), PVA (Polyvinylalkohol), PVC (Polyvinylchlorid), PVDC (Polyvinylidenchlorid), PVF (Polyvinylfluorid), PVDF (Polyvinylidenfluorid), SAN (Styrol-Acrylnitril), SBR (StyrolButadien-Kautschuk), bevorzugt sind PET, PA, PEN und PBT. Diese Gewebe mit Filamenten organischer Polymere oder auch textile Gewebe können vorzugsweise einzelne an definierten Positionen eingewebte Metalldrähte/Metallfilamente aufweisen oder auch einzelne oder im Wesentlichen vollständig metallisch beschichtete Filamente aufweisen. Als Beschichtung kommen alle elektrisch leitenden Metalle und Legierungen in Betracht, die dem Fachmann hinlänglich bekannt sind. Beispiele für Metallbeschichtungen sind Beschichtungen mit Platin, Gold, Aluminium und/oder Titan. Besonders bevorzugt ist ein Gewebe aus PET-Filamenten mit einer Platinbeschichtung oder mit eingewebten Platinfilamenten. Alternativ können die organischen Filamente auch elektrisch leitende Polymere oder elektrisch leitende Füllstoffe enthalten, wie sie nachstehend genannt sind. Bekannte leitfähige Gewebe bestimmter Polymere der Firma Sefar müssen, um präge- oder tiefziehfähig zu sein, mit einer oder zwei gegebenenfalls reversiblen Folien auf den Oberflächen versehen sein, insbesondere müssen die leitfähigen Gewebe im Verbund mit mindestens einer Folie vorliegen, die ebenfalls tiefziehfähig, mindestens aber entsprechend elastisch ist.

Als Kontaktelektrode kann die Elektrode eines Gewebes metallischer oder organischer Filamente mit zwei Metallkontakten versehen sein. Als Kontakte eigenen sich im Wesentlichen alle elektrisch leitenden Metalle oder Legierungen, die dem Fachmann hinlänglich bekannt sind. Beispielsweise sind Silber, Gold, Aluminium, Ruß oder auch Kupfer oder eine ihrer Legierungen als Kontaktierung besonders geeignet.

Die elektrisch leitenden Gewebe polymerer Filamente, insbesondere mit einer Bindung der Filamente - als Kett- und Schussfäden - gemäß DIN 9044:2001-09, 3.9, können nach dem Einweben metallischer Filmanten oder nach Auftragung einer metallischen Beschichtung auch weiter beschichtet werden, beispielsweise mit Titandioxid in Form von Nanopartikeln, mit Siloxanen, Siliziumdioxid, PVDF, ETFE oder auch mit geeigneten transparenten Polymeren, um sie für Flüssigkeiten und/oder Gas undruchdringlich zu machen oder auch als Schutz. Besonders bevorzugt ist es daher, wenn die elektrische leitenden Gewebe polymerer Filamente mit einer Trägerfolie oder besser mit einer schützenden und/oder isolierenden Beschichtung versehen werden. Dabei kann die Beschichtung der Gewebe einseitig flächig erfolgen, so dass die zweite Seite des Gewebes weiterhin elektrisch leitfähig ist. Die Beschichtung kann beispielsweise auch aus Lösung, beispielsweise durch Tauchen, Aufrollen, Sprühen oder andere dem Fachmann bekannte Verfahren erfolgen.

Der Gitternetzabstand der Filamente oder Drähte weist im Gitternetz eine Maschenweite, insbesondere gemäß DIN ISO 9044:2001-09, von 1 bis 500 $\mu$m auf, insbesondere von 2 bis 220 $\mu$m, ganz besonders von 10 bis 75 $\mu$m Vorzugsweise liegen die Maschenweiten im Bereich um 20 bis 220 $\mu$m. Vorteilhafter sind Gitternetze, insbesondere Gewebe, mit Maschenweiten von 10 bis 60 $\mu$m, vorzugsweise von 20 bis 60 $\mu$m, bevorzugt von 21 bis 57 $\mu$m, besonders bevorzugt von 23 bis 55 $\mu$m oder alternativ auch 30.

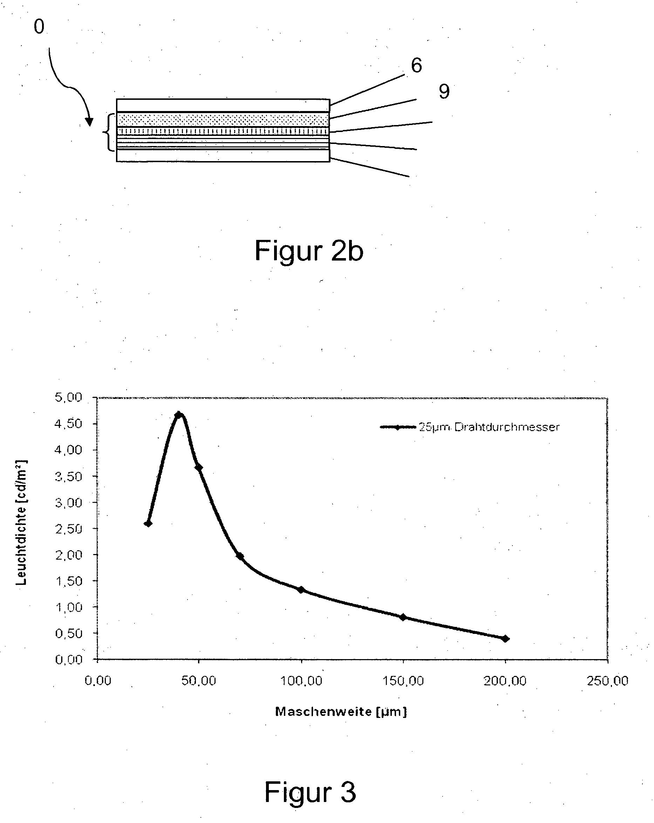

Anhand der in Figur 3 dargestellten Kurve ist zu erkennen, dass die Maschenweite einen signifikanten Einfluss auf die Leuchtdichte einer elektrolumineszierenden Lampe hat. Das Optimum liegt zwischen 20 und 60 $\mu$m, wenn keine weiteren Maßnahmen zur Homogenisierung des elektrischen Feldes in den Gitternetzzwischenräumen ergriffen werden. Bei zu niedriger Maschenweite sinkt die Transmission zu stark ab, weil der Drahtdurchmesser im Vergleich zur offenen Fläche zu dick wird. Dieser Effekt kompensiert den Leuchtdichtezuwachs durch das immer homogener werdende elektrische Feld.

Die Filamente oder Drähte weisen einen Durchmesser von 2 bis 40 $\mu$m, insbesondere von 5 bis 40 $\mu$m, vorzugsweise von 12 bis 40 $\mu$m auf, insbesondere von 13 bis 40 $\mu$m, bevorzugt von 13 bis 35 $\mu$m, besonders bevorzugt von 13 bis 30 $\mu$m. Dabei ist es besonders vorteilhaft, wenn die Gitternetze, insbesondere Gewebe, diese Durchmesser in Kombination mit den vorgenannten Maschenweiten aufweisen. Durch diese Maßnahme können in der späteren Anwendung in flächigen, tiefziehfähigen, elektrolumineszierenden Lampen besonders hohe Leuchtdichten erzielt werden.

Ferner ist es von Vorteil, wenn zusätzlich oder alternativ zu den vorgenannten Merkmalen die elektrisch leitenden Metalle, Metallpartikel und/oder die mindestens eines der Metalle enthaltende, elektrisch leitende Legierung mindestens eines der Metalle ausgewählt aus Aluminium, Kupfer, Eisen, Silber, Gold, Zink, Wolfram, Chrom, Blei, Titan, Nickel, Platin und/oder Gadolinium umfassen. Eine der bevorzugten Legierungen umfasst Nitinol.

Gemäß eines besonders bevorzugten Aspektes der vorliegenden Erfindung enthält die flächige, transparente Elektrode zusätzlich oder alternativ zu den vorgenannten oder nachstehenden Merkmalen in den Gitternetzzwischenräumen des Gitternetzes, insbesondere mit einer vorstehend offenbarten Maschenweite, eine organische, flexible und gegebenenfalls leitfähige Polymermasse. In einer besonders vorteilhaften Ausführungsform werden die Zwischenräume der Metallgewebe mit einer organischen flexiblen Beschichtung aus beispielsweise Baytron ausgefüllt. Gemäß einer weiteren besonders bevorzugten Ausführungsform werden die Gitternetzzwischenräume eines Gewebes polymerer Filamente, die mit einer elektrisch leitfähigen Beschichtung versehen sind, mit einer organischen, flexiblen und gegebenenfalls leitfähigen Polymermasse, wie beispielsweise Baytron, ausgefüllt. Eine derartige Elektrode kann als Schutz auf beiden Oberflächen reversibel mit Schutzfolien oder Schutzbeschichtungen versehen werden. Zudem kann diese Vorgehensweise verfahrenstechnische Vorteile bringen, indem die elektrische Schicht beim Beschichten des Gewebes nicht beeinträchtigt wird. Derartige Elektroden haben ein weites Einsatzfeld und können auch in Solaranwendungen oder OLEDs eingesetzt werden.

Wenn in den Gitternetzzwischenräumen des Gitternetzes eine organische, flexible und gegebenenfalls leitfähige Polymermasse enthalten ist, weist das Gitternetz eine Maschenweite von 50 $\mu$m bis 5000 $\mu$m, ganz besonders bevorzugt 50 bis 2000 $\mu$m, weiter ganz besonders bevorzugt 50 bis 500 $\mu$m auf.

Ferner ist es von Vorteil, wenn zusätzlich oder alternativ zu den vorgenannten Merkmalen das Gitternetz aus polymeren Filamenten der Elektrode bei einer Dehngeschwindigkeit von 300 mm/min und einer Temperatur von 23 °C eine Reißdehnung von mehr als 10 %, insbesondere von mehr als 20 % oder sogar von mehr als 50 % und außerdem einen Zug-Elastizitätsmodul von weniger als 1000 MPa oder sogar von höchstens 250 MPa aufweist.

Gemäß einer Alternative kann die transparente Elektrode auch ein aufdruckbares, elektrisch leitendes Gitter aus einer elektrisch leitenden Tinte, Lack oder Druckfarbe sein. Derartige transparente Elektroden können Polymermassen, die beispielsweise Polyanilin, 1,3-Diethylendioxide-Derivate des Imidazolins oder auch EOlml-2,2 enthalten, umfassen. Diese Polymermassen können gegebenenfalls mindestens einen elektrisch leitenden Füllstoff enthalten, der ausgewählt sein kann aus der Gruppe umfassend Metallpartikel wie Silber, Gold, Platin, Aluminium oder eine Legierung enthaltend eines der Metalle oder ausgewählt aus Graphit, Kohlenstoff-Nanoteilchen, Kohlenstoff-Nanoröhren, Ruß, Leitruß, Fullerenen, Fulleren-Derivaten und Acetylen-Ruß. Ein bevorzugt aufdruckbares, elektrisch leitendes Gitter ist eine Silber oder Aluminium enthaltende Druckfarbe oder Tinte. Ebenfalls bevorzugt ist Carbotinte oder eine Kohlenstoffnanoröhren enthaltende Druckfarbe. Vorzugsweise kann die Elektrode als flächiges Element in Form eines Gitternetzes auf eine Transferfolie aufgedruckt werden und später mit einer Leuchtschicht, wie sie nachstehend beschrieben wird, flächig verbunden werden. Anschließend kann die Transferfolie entfernt werden und gegebenenfalls durch eine isolierend wirkende Schicht ersetzt werden. Weiter vorzugsweise kann das Gitter direkt auf die EL-Schicht aufgedruckt werden.

Als elektrisch leitende Füllstoffe sind grundsätzlich alle geeigneten elektrisch leitenden Füllstoffe einsetzbar, die mit der jeweiligen Polymermasse kompatibel sind. Insbesondere werden hierfür Füllstoffe eingesetzt, die ausgewählt sind aus der Gruppe umfassend Graphit und Ruß, insbesondere Leitruß (beispielsweise Printex® XE der Fa. Degussa), sowie beliebige Kombinationen davon. Zusätzlich oder stattdessen können bevorzugt auch andere Füllstoffe auf Kohlenstoffbasis eingesetzt werden, insbesondere solche, die nanoskalig sind, also in mindestens einer Raumdimension eine Ausdehnung von nicht mehr als 500 nm, bevorzugt von weniger als 200 nm oder sogar von weniger als 50 nm aufweisen, zum Beispiel Kohlenstoff-Nanoteilchen wie Kohlenstoff-Nanoröhren (beispielsweise Carbon Nanotubes der Fa. Ahwahnee oder Carbon-Nanotube-Masterbatches der Fa. Hyperion Catalysis), Kohlenstoff-Nanofasern (carbon nanofibres), Fullerene und dergleichen.

Vorteilhafterweise wird der Füllstoff in einer derartigen Menge eingesetzt, dass der Anteil des Füllstoffs in der jeweiligen Polymermasse groß genug ist, um einen hinreichend niedrigen Widerstand der Polymermasse zu gewährleisten, insbesondere muss die Perkolationsgrenze überschritten sein, damit die leitenden Füllstoffe ein Netzwerk durch gegenseitige Berührung beziehungsweise gegenseitigen Kontakt ausbilden können. Weiterhin können die Füllstoffe oberflächenmodifiziert eingesetzt werden. Dadurch können gezielt die Eigenschaften der Polymermasse beeinflusst werden, etwa, um die Dispergierbarkeit von Kohlenstoff-Nanoröhren oder Ruß in der Polymermasse zu verbessern.

Die Leitfähigkeit der Polymermassen ist unter anderem abhängig vom Füllgrad des elektrisch leitenden Füllstoffs, das heißt dessen Massenanteil in der Polymermasse. Durch Anheben des Füllgrades lassen sich höhere Leitfähigkeiten erreichen. Daneben ist die elektrische Leitfähigkeit einer Polymermasse auch von deren Basispolymer abhängig. Der Füllgrad beträgt vorteilhafterweise zwischen 1 und 90 Gew.-%, insbesondere zwischen 1 bis 60 Gew.-% in Bezug auf die Gesamtzusammensetzung. Sehr bevorzugt werden zwischen 20 und 50 Gew.-% an Füllstoff eingesetzt.

Um eine elektrisch leitende Polymermasse zu erhalten, können die elektrisch leitenden Füllstoffe den Monomeren der Polymermasse vor der Polymerisation und/oder während der Polymerisation beigemischt werden und/oder mit den Polymeren erst nach Beendigung der Polymerisation vermengt werden. Vorzugsweise wird der elektrisch leitende Füllstoff nach der Polymerisation zu einer Schmelze eines Basispolymers der Polymermasse hinzugegeben.

Als elektrisch leitende Polymermassen werden im Stand der Technik üblicherweise rußhaltige teilkristalline Thermoplaste wie etwa Polyolefine, Polyvinylidenfluorid, Polyhexafluorpropylen oder Poyltetrafluorethylen verwendet. Der Stand der Technik ist in DE 29 48 350 A1, US 7,592,389 B2, EP 0 673 042 B1 sowie EP 0 324 842 A1 detailliert beschrieben. Diese elektrisch leitfähigen Polymermassen können in Form einer Tinte auf die Leuchtschicht aufgebracht werden. Alternativ können sie auch auf eine durchgängige Leiterfläche aufgebracht werden, die als elektrische Kontaktierungselektrode dient und die auf einer separaten Trägerfolie einer Stärke von üblicherweise 10 $\mu$m, 12 $\mu$m, 23 $\mu$m, 50 $\mu$m oder 75 $\mu$m bis 250 $\mu$m angeordnet ist. Das in der Tinte enthaltene Lösungsmittel wird in einem abschließenden Trocknungsschritt entfernt. Derartige Tinten sind in US 2009/039781 A1, US 6,582,628 B2, WO 2003/054981 A1 ausführlich beschrieben.

Druckbare elektrisch leitende Silber oder Aluminium enthaltende Pasten können auch einen hohen Feststoffgehalt dieses Füllstoffs von bis zu 80 Gew.-% in Bezug auf die Gesamtzusammensetzung aufweisen. Diese Pasten können bindemittelhaltig sein und getrocknet oder auch bei erhöhten Temperaturen eingebrannt werden.

Unter Tiefziehen beziehungsweise tiefziehfähig wird das nach DIN 8584 Teil 3 (Sep. 2003), Zugdruckumformen eines Blechzuschnitts (auch Folie, Platte, Tafel oder Platine genannt) in einen einseitig offenen Hohlkörper oder eines vorgezogenen Hohlkörpers in einen solchen mit geringerem Querschnitt ohne gewollte Veränderung der Blechdicke beziehungsweise - hier beispielsweise Elektrodendicke - verstanden.

Dem Fachmann ist geläufig, dass die Elektrode in der Regel auch über elektrische Anschlüsse, das heißt über eine Kontaktanordnung beziehungsweise Kontaktierungselektroden, zur elektrischen Verbindung mit Wechselspannungsquelle verfügt.

Die eingangs genannten elektrolumineszierenden-Lampen (EL-Lampen) weisen eine untere Elektrode, eine Leuchtschicht aus Matrix und Leuchtpartikeln, gegebenenfalls ein Dielektrikum und eine oberen Elektrode auf. Dabei kann bereits die Matrix ein Dielektrikum umfassen beziehungsweise die Funktion des Dielektrikums übernehmen. Daher kann die Leuchtschicht mit der Matrix mit Leuchtpartikeln die dielektrische Schicht sein, wenn die Matrix die Funktion des Dielektrikums übernimmt. Generell können diese EL-Lampen auch einen mehrschichtigen Verbundaufbau im Bereich der Leuchtschicht und gegebenenfalls des Dielektrikums aufweisen, um beispielsweise die Lichtdichte oder auch die Farben des Lichts zu beeinflussen. Die einzelnen Schichten der EL-Lampe werden üblicherweise sukzessive im Siebdruck aufeinander aufgebaut und weisen dann die eingangs genannten Nachteile wie Brüchigkeit und mangelnde chemische Stabilität auf. Mit der flächigen, transparenten Elektrode lassen sich nun alle diese Nachteile überwinden und prägebeziehungsweise tiefziehfähige EL-Lampen in Form eines Flächenelements herstellen. Die erfindungsgemäßen EL-Lampen können nun zudem unter Einwirkung von Hitze und/oder Druck in einem Laminierverfahren hergestellt werden.

Gegenstand der Erfindung sind daher Flächenelemente, die einer EL-Lampe entsprechen, und ihre erfindungswesentlichen Eigenschaften durch die flächigen, transparenten Elektroden als Front- und/oder Mittelelektrode oder gegebenenfalls auch aus Rückelektrode beziehen.

Ein erfindungsgemäßes Flächenelement umfasst die Schichtabfolge Frontelektrode, Leuchtschicht mit einer Matrix mit Leuchtpartikeln, die unter Einwirkung eines elektrischen Wechselspannungsfeldes lumineszieren und gegebenenfalls mindestens eine dielektrische Schicht sowie eine Rückelektrode Die Matrix und/oder die dielektrische Schicht enthalten ein Dielektrikum, und die Elektroden sind gegebenenfalls geträgert, und die Frontelektrode ist eine flächige, zumindest teilweise transparente Elektrode, die ein flächiges Element mit einem elektrisch leitenden Material, insbesondere Metall enthaltendem Material, umfasst, die Elektrode ist insbesondere trägerlos, und das elektrisch leitende Material des Elements weist bei Raumtemperatur (20 bis 25 °C) eine Reißdehnung zwischen 1 und 70 %, insbesondere zwischen 10 bis 70 % und eine Zugfestigkeit zwischen 5 bis 2500 N/mm$^2$ auf, und das flächige Element ist ein flächiges Gitternetz mit mindestens einem elektrisch leitenden Filament des Materials. Die Merkmale von besonders bevorzugten Ausführungsformen der transparenten Elektrode sind vorstehend und in den Unteransprüchen detailliert beschrieben. Erfindungsgemäß kann ein Gitternetz, insbesondere ein Gewebe mit glatter Bindung (DIN 9044) eingesetzt werden.

Ein besonders großer Vorteil ergibt sich, wenn die Metallgewebeelektrode als Front- und/oder Rückelektrode von EL-Lampen eingesetzt wird. Bei Verwendung von flexiblen viskoelastischen Materialien als Matrix für die EL-Partikel und falls gewünscht optional als Dielektrikum, kommt die duktile Metallgewebeelektrode besonders positiv zum Tragen, weil das gesamte elektrolumineszierende Flächenelement dann tiefzieh- beziehungsweise prägefähig wird. Bei Einkapselung des elektrolumineszierenden Flächenelementes mit weiteren Folien auf der Unter- und/oder Oberseite zu einem komplexen Multischichtaufbau unter Verwendung von ausschließlich tiefziehfähigen Folien, wird der gesamte Aufbau tiefzieh- beziehungsweise prägefähig.

Alternativ kann als tiefziehfähige Rückelektrode, dessen Transparenz nicht obligatorisch groß sein muss, eine mit Aluminium beschichtete Kunststofffolie verwendet werden, wobei als Kunststoff eine dem Fachmann bekannte Formulierung verwendet werden kann, die tiefziehfähig ist. Bekannte Beispiele für tiefziehfähige Kunststofffolien umfassen Polycarbonat, Polyamid-, Polyvinylchlorid-, Polyethylen-, Polypropylen-, Polyester-, Polystyrolfolien sowie Verbundfolien aus verschiedenen Polymeren oder aus Blends der verschiedenen Polymere. Selbst im Bereich scharfer Kanten und komplexer Prägefiguren bleibt die Funktion der Elektroden erhalten.

In dem erfindungsgemäßen Flächenelement, insbesondere der EL-Lampe, ist eine bestimmte Schichtabfolge vorgesehen. Als Schichtabfolge wird insbesondere eine räumliche Anordnung von einzelnen Schichten bezeichnet, die senkrecht zu ihrer Hauptausdehnung übereinander (stapelförmig) angeordnet sind. Diese können jeweils direkt miteinander in Kontakt stehen, ohne dass dazwischen weitere Schichten vorhanden sind. Alternativ können sie auch durch weitere Schichten, insbesondere isolierend oder schützend wirkende Schichten getrennt sein. Als Schicht wird insbesondere eine flächenförmige Ausdehnung eines Systems einheitlicher Funktionalität bezeichnet, deren Abmessungen in einer Raumrichtung signifikant kleiner ist als in den beiden anderen Raumrichtungen, die die Hauptausdehnung definieren. Eine derartige Schicht kann kompakt oder auch durchbrochen ausgebildet sein und aus einem einzigen Material oder aus unterschiedlichen Materialien bestehen, wie beispielsweise die Leuchtschicht, wobei letzteres insbesondere dann der Fall sein kann, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

Bei dem vorstehend beschriebenen mehrschichtigen Aufbau des Flächenelements, das heißt der EL-Lampe, ist die Leuchtschicht zwischen zwei Elektroden fixiert. Daher kann auch von einem Leuchtkondensator gesprochen werden. Eine weitere dielektrische Schicht ermöglicht für das System eine höhere Spannungsfestigkeit. Die einzelnen Schichten übernehmen die nachfolgend erläuterten Aufgaben. Die beiden Elektroden sind im Allgemeinen zum Schutz der leitenden Schicht auf Folien aufgebracht oder mit einer isolierenden oder schützenden Beschichtung versehen. Die Frontelektrode, die auch Mittelelektrode sein kann, ist transparent und ermöglicht somit den Lichtaustritt aus dem Flächenelement. Die Rückelektrode kann aus unterschiedlichen leitenden Materialien bestehen. Die Leuchtschicht umfasst die in eine Matrix eingebetteten Leuchtpartikel, wie zum Beispiel Leuchtphosphor oder ZnS. Beim Anlegen einer Wechselspannung an die Elektroden beginnen die Leuchtpartikel zu leuchten. Die Matrix kann ein polymeres Material sein, das darüber hinaus auch als Dielektrikum wirken kann.

Eine dielektrische Schicht/Dielektrikum umfasst in der Regel ein Harz, welches mit anorganischen Stoffen hoher Dielektrizitätskonstante, wie beispielsweise Bariumtitanat, gefüllt ist. Der Fachmann weiß, dass als dielektrische Schicht alle üblichen Dielektrika oder polymere Verbindungen mit dielektrischen Füllstoffen für das Flächenelement eingesetzt werden können. Die dielektrische Schicht verhindert Durchschläge bei hohen Spannungen. Vorzugsweise ist die Oberfläche der dielektrischen Schicht auf der zur Leuchtschicht gewandten Seite stark reflektierend, um zusätzliche Lichtstrahlen zur Vorderseite der Lampe, in Richtung der Frontelektrode zu werfen.

Der hier offenbarte Drei-Schicht-Aufbau verwendet keine separate dielektrische Schicht, die reflektierend ausgerüstet ist oder sein kann, sondern eine reflektierende Aluminiumelektrode, die auf eine PET-Folie gedampft ist. Eine nicht reflektierende Schicht zum Beispiel aus Leitruß würde Licht absorbieren und somit die Leuchtdichte der Lampe vermindern. Ein weiterer besonderer Vorteil dieser Aluminiumelektroden ist ihr sogenannter Selbstheilungseffekt. Dieser Selbstheilungseffekt kann zum Tragen kommen, denn wenn es zu einem punktuellen Stromdurchschlag kommt erwärmt sich diese Stelle. Das Aluminium kann aufgrund seines niedrigen Schmelzpunktes aufschmelzen und unterbricht somit wieder den Stromfluss. Der Schmelzpunkt von Aluminium liegt bei ca. 660 °C.

In alternativen Ausführungsformen kann das Flächenelement auch einen Mehrschichtaufbau dahingehend aufweisen, das auf eine erste Frontelektrode mit darunterliegender Leuchtschicht ein oder mehrere weitere Schichten mit dem Schichtaufbau Frontelektrode, Leuchtschicht aufgebracht werden, um beispielsweise mehrfarbige Flächenelemente aufzubauen. Durch diese Maßnahme wird die erste Frontelektrode zu einer transparenten Mittelelektrode, insbesondere einer EL-Lampe. Dem Fachmann ist ferner geläufig, dass außen auf der Frontelektrode und der Rückelektrode weitere Beschichtungen, beispielsweise zur elektrischen Isolation, zur Reflexion von Lichtstrahlen oder zur Verbesserung der chemischen Beständigkeit vorgesehen werden können, ohne den Rahmen der Erfindung zu verlassen. So werden bevorzugt auf die Frontelektrode transparente polymere und plastisch verformbare Beschichtungen aufgebracht. Typische Materialien sind Silikonelastomere und Acrylate, Acrylatlacke, Fluorpolymere, beispielsweise Fluorpolymerbeschichturigen umfassend PVDF, VDF/HFP-Copolymer Vinylidenfluorid/Hexafluoropropylen=Copolymer, PTFE und/oder Mischungen enthaltend mindestens eines der Polymere, oder auch Polyurethan, Polyester sowie weitere dem Fachmann geläufige bekannte Lacke oder Beschichtungen. Bevorzugt sind unter anderem Polyurethan-Beschichtungen, Polyesterbeschichtungen und/oder Fluorpolymere enthaltende Beschichtungen.

Als Leuchtpartikel in der Matrix haben sich dotierte ZnS, ZnSe, ZnS/CdS und/oder Phosphor enthaltende Leuchtpartikel bewährt oder auch jene, die eine Mischung mindestens einer dieser Verbindungen enthalten. Bekannt ist es auch die Leuchtpartikel über ein Mikro-Verkapselungsverfahren herzustellen. Der Massenanteil des Leuchtmittels in der Matrix kann beliebig geeignet gewählt werden und beträgt in der Leuchtschicht üblicherweise zwischen 1 Gew.-% und 90 Gew.-%, vorzugsweise zwischen 40 Gew.-% und 75 Gew.-%, insbesondere zwischen 55 Gew.-% und 65 Gew.-%.

Bei der durch elektrische Felder angeregten Elektrolumineszenz werden verschiedene Anwendungsformen unterschieden. So gibt es die Dünnschicht-Elektrolumineszenz, die gleichfeldgerichtete Dickschicht-Pulver-Elektrolumineszenz und die wechselfelderregte Dickschicht-Pulver-Elektrolumineszenz. Ausgangssubstanzen zur Herstellung der Leuchtpartikel sind die vorgenannten Zinksulfide oder Zinkselenide, die mit Aktivatoren aus zum Beispiel Kupfer oder Mangan und sogenannten Koaktivatoren, wie zum Beispiel Chlor oder Iod, zur Effizienzsteigerung versetzt werden können. Zum Schutz vor Luftfeuchtigkeit können die Partikel dieser Verbindungen oder auch von Phosphor in der Regel mit einer Schutzschicht versehen, beispielsweise mit einem inerten Metalloxid, wie Aluminiumoxidhydroxid. Diese Schutzschicht kann vor einem schnellen Abfall der Leuchtdichte in dem System schützen, wie sie durch Feuchtigkeit verursacht wird schützen.

Besonders bevorzugte Polymere zur Herstellung der Matrix oder als Matrix weisen eine relative Permittivität von mehr als 4,5 auf. Es wurde festgestellt, dass bei einem haftklebrigen Polymer mit einer derartig hohen relativen Permittivität (Permittivitätszahl, relative Dielektrizitätskonstante; Formelzeichen: Er) die Leuchtdichte einer mit diesem Polymer hergestellten Matrix mit Leuchtpartikeln als Leuchtschicht bei gleicher Schichtdicke der Leuchtschicht sehr hoch ist. Weiter ist es insbesondere von Vorteil, wenn die Matrix insgesamt eine relative Permittivität von weniger als 25 aufweist. Auf diese Weise können die dielektrischen Verluste (Imaginärteil der Permittivität) bei der Elektrolumineszenz gering gehalten werden, so dass ein besonders günstiger Kompromiss zwischen möglichst hoher Leuchtdichte einerseits und möglichst geringer Verlustleistung andererseits erhalten wird.

Als Matrix als auch zur Herstellung der Matrix sind insbesondere die in WO 2007/107591 A1 und DE 10 2008 062 129 A1 offenbarten Polymere zur Herstellung einer Leuchtschicht besonders geeignet. Auf den Offenbarungsgehalt der DE 10 2008 062 129 A1 wird vollumfänglich Bezug genommen und zum Gegenstand der vorliegenden Erfindung gemacht, insbesondere die Offenbarung auf den Seiten 3, Zeile 8 bis Seite 25, Zeile 18, um die dort genannten Polymere oder Klebmassen als Matrix der Leuchtschicht einzusetzen.

Auf den Offenbarungsgehalt der WO 2007/107591 A1 wird ebenfalls vollumfänglich Bezug genommen, insbesondere auf die Offenbarung zu den Haftklebemassen und deren Herstellung auf den Seiten 3, Zeile 4 bis Seite 13, Zeile 10, um sie erfindungsgemäß als Matrix der Leuchtschicht einzusetzen.

Auch aus der DE 10 2006 013 834 A1 ist beispielsweise eine Haftklebemasse bekannt, die als Matrix für die Leuchtpartikel (elektrolumineszierende Leuchtmittel) eingesetzt wird. Generell können die dort offenbarten Haftklebemassen auf Basis von Poly(meth)acrylaten, Silikonen, Polysiloxanen, Synthesekautschuken, Polyurethanen sowie Klebemassensysteme auf Blockcopolymerbasis erfindungsgemäß als Matrix für die Leuchtpartikel der Leuchtschicht eingesetzt werden. Dementsprechend wird auf den Inhalt der DE 10 2006 013 834 A1 vollständig Bezug genommen und zum Gegenstand dieser Offenbarung gemacht.

DE 10 2006 013 834 A1 beschreibt besonders ausführlich Selbstklebemassen auf Poly(meth)acrylatbasis, also Selbstklebemassen, die als Basispolymer ein Polymer aus einer (Meth)Acrylat-Monomermischung enthalten (die Bezeichnung (Meth)Acrylat dient im folgenden der vereinfachten Beschreibung und beinhaltet sowohl Acrylate als auch Methacrylate, das heißt deren Säuren wie auch deren Derivate, beispielsweise Ester). Insbesondere sind in diesem Dokument Mischungen benannt, die zu 70 Gew.-% bis 100 Gew.-% der Monomermischung einen oder mehrere (Meth)Acrylsäureester, die mit Alkylalkoholen mit 1 bis 30 C-Atomen verestert sind, enthalten und die darüber hinaus optional höchstens 30 Gew.-% eines oder mehrerer olefinisch ungesättigter Monomere mit funktionellen Gruppen aufweisen können. In der Praxis hat sich gezeigt, dass sich bei Verwendung dieser Selbstklebemassensysteme mit handelsüblichen Leuchtmitteln Elektrolumineszenzvorrichtungen von guter Leuchtkraft und Langzeitstabilität realisieren lassen.

Gemäß einer besonders bevorzugten Ausführungsform der Erfindung betrifft eine mit Leuchtpartikeln versehene Matrix, die ihrerseits vorzugsweise ein Polymer aus einer Monomermischung umfasst, die in Bezug auf die Monomermischung

(a) einen überwiegenden Anteil, insbesondere 70 bis 99,9 Gew.-% eines oder mehrerer Acrylsäureester und/oder Methacrylsäure-ester mit der Formel $CH_2=CH(R_3)(COOR_4)$, wobei der Rest $R_3$ die Substituenten H und/oder $CH_3$ und der Rest $R_4$ Alkylketten mit 4 bis 14 C-Atomen darstellt; und

(b) 0,1 bis 30 Gew.-%, bevorzugt 0,5 bis 10 Gew.-% eines oder mehrerer olefinisch ungesättigter Monomere mit funktionellen Gruppen, insbesondere mit funktionellen Gruppen, die eine Vernetzung eingehen können, wie Acrylsäure, Methacrylsäure, Hydroxyethylacrylat, Glycidylacrylat, Glycidylmethacrylat oder copolymerisierbare Photoinitiatoren,

umfasst.

Zusätzlich kann die Matrix eine oder mehrere Komponenten c) umfassen, die zusammen mit den anderen Komponenten copolymerisiert werden. Die Comonomere der Komponente (c) können bis zu 40 Gew.-% der Monomermischung ausmachen.

Bevorzugt sind die Anteile der entsprechenden Komponenten a, b, und c derart gewählt, dass das Copolymer eine Glastemperatur $(T_G) \leq 15°$ C aufweist. Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen. Die Glasübergangstemperatur der der Haftklebemassen zugrunde liegenden Polymere liegt vorteilhaft unterhalb 15 °C im Sinne einer dynamischen Glasübergangstemperatur für amorphe Systeme und der Schmelztemperatur für semikristalline Systeme verstanden, die durch dynamisch mechanische Analyse (DMA) bei geringen Frequenzen bestimmt werden können.

Die Steuerung der gewünschten Glasübergangstemperatur kann durch die Anwendung der Gleichung

$$\frac{1}{T_G} = \sum_n \frac{w_n}{T_{G,n}} \qquad (G1)$$

in Analogie zur Fox-Gleichung (vgl. T.G. Fox, Bull. Am. Phys. Soc. 1 (1956) 123) bei der Zusammenstellung der Monomermischung, welche der Polymerisation zugrunde liegt, erzielt werden. In der Gleichung (G1) repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Die Monomere der Komponente (a) sind insbesondere weichmachende und/oder unpolare Monomere. Ihre Zusammensetzung in der Monomermischung wird dermaßen gewählt, dass die resultierenden Polymere bei Raumtemperatur oder höheren Temperaturen als Haftklebemassen eingesetzt werden können, also derart, dass die resultierenden Polymere haftklebrige Eigenschaften besitzen.

Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Spezifische Beispiele, ohne sich durch diese Aufzählung einschränken zu wollen, sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie zum Beispiel 2-Ethylhexylacrylat, 2-Ethylhexylmethacrylat.

Die Monomere der Komponente (b) sind insbesondere olefinisch ungesättigte Monomere (b) mit funktionellen Gruppen, insbesondere mit funktionellen Gruppen, die eine Vernetzung eingehen können. Die Vernetzung kann durch Reaktion der funktionellen Gruppen mit sich selbst, anderen funktionellen Gruppen oder nach Zusatz eines geeigneten Vernetzungsagents erfolgen.

Bevorzugt werden für die Monomere (b) Monomere mit folgenden funktionellen Gruppen eingesetzt: Hydroxy-, Carboxy-, Epoxy-, Säureamid-, Isocyanato- oder Aminogruppen. Insbesondere bevorzugt sind Monomere mit Carbonsäure, Sulfonsäure-, oder Phosphonsäuregruppen.

Besonders bevorzugte Beispiele für die Komponente (b) sind Acrylsäure, Methacrylsäure, Itaconsäure, Maliensäure, Fumarsäure, Crotonsäure, Aconitsäure, Dimethylacrylsäure, β-Acryloyloxypropionsäure, Trichloracrylsäure, Vinylessigsäure, Vinylphosphonsäure, Hydroxyethylacrylat, Hydroxypropylacrylat, Hydroxyethylmethacrylat, Hydroxypropylmethacrylat, Allylalkohol, Glycidylacrylat, Glycidylmethacrylat, 6-Hydroxyhexylmethacrylat, N-Methylolmethacrylamid, N-(Buthoxymethyl)methacrylamid, N-Methylolacrylamid, N-(Ethoxymethyl)acrylamid, wobei diese Aufzählung nicht abschließend ist.

Bevorzugte Monomere (b) können auch funktionelle Gruppen enthalten, die eine nachfolgende strahlenchemische Vernetzung (z: B. Elektronenstrahlen, UV) oder über Peroxide unterstützen. Geeignete copolymerisierbare Photoinitiatoren sind beispielsweise Benzoinacrylat und acrylatfunktionalisierte Benzophenonderivate. Monomere, die eine Vernetzung durch Elektronenbestrahlung oder Peroxide unterstützen sind, zum Beispiel Tetrahydrofufurylacrylat, N-tert. Butylacrylamid, Allylacrylat wobei diese Aufzählung nicht abschließend ist.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Bevorzugte Monomere (c) sind, wobei diese Aufzählung nicht abschließend ist, zum Beispiel Methylacrylat, Ethylacrylat, Propylacrylat, Methylmethacrylat, Ethylmethacrylat, Benzylacrylat, Benzylmethacrylat, tert.-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, , Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, Dimethylaminopropylacrylamid, Dimethylaminopropylmethacrylamid, N-(1-Methylundecyl)-acrylamid, N-(Buthoxymethyl)methacrylamid, N-(Ethoxy-methyl)acrylamid, N-(n-Octadecyl)acrylamid, weiterhin N,N-Dialkylsubstituierte Amide, wie beispielsweise N,N-Dimethylacrylamid, N,N-Dimethylmethylmethacrylamid, N-Benzyl-acrylamide, N-Isopropylacrylamid, N-tert.-Butylacrylamid, N-tert-Octylacrylamid, 2-Butoxyethylacrylat, 2-Butoxy-ethylmethacrylat, 3-Methoxyacrylsäuremethylester, 3-Methoxybutylacrylat, Phenoxy-ethylacrlylat, Phenoxyethylmethacrylat, 2-Phenoxyethylmethacrylat, Butyldiglykolmethacrylat, Ethylenglycolacrylat, Ethylenglycolmonomethylacrylate, Methoxy Polyethylenglykol-methacrylat 350, Methoxy Polyethylenglykolmethacrylat 500, Propyleneglycolmono-methacrylat, Butoxydiethylenglykol-methacrylat, Ethoxytriethylenglykolmethacrylat, Octa-fluoropentylacrylat, Octafluoropentyl-methacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4, 5,5,6,6, 7,7, 8,8,8- Pentadecafluoro-octylmethacrylat, Acrylnitril, Methacrylnitril, Vinylmethylether, Ethylvinylether, Vinylisobutylether, Vinylacetat, Vinylchlorid, Vinylhalogenide, Vinylidenchlorid, Vinylidenhalogenide, Vinylpyridin, 4-Vinylpyridin, N-Vinylphthalimid, Styrol, a- und p-Methylstyrol, a-Butylstyrol, 4-n-Butylstyrol, 4-n-Decylstyrol, 3,4-Dimethoxystyrol, N-Vinyllactam, N-Vinylpyrrolidon,

Die mittleren Molekulargewichte Mw der bei der mit Leuchtmitteln versehenen Matrix, umfassend Polyacrylathaftklebemassen, liegen sehr bevorzugt in einem Bereich von 20.000 bis 2.000.000 g/mol; oder alternativ für eine Matrix als Schmelzhaftkleber bevorzugt in einem Bereich von 100.000 bis 500.000 g/mol [Die Angaben des mittleren Molekulargewichtes Mw und der Polydispersität PD in dieser Schrift beziehen sich auf die Bestimmung per Gelpermeationschromatographie. Die Bestimmung erfolgt an 100 μl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Torsäule wird eine Säule Typ PSS-SDV, 5 μ, $10^3$ A, ID 8,0 mm x 50 mm verwendet. Zur Auftrennung werden die Säulen des Typs PSS-SDV, 5 μ, $10^3$ Å sowie $10^5$ Å und $10^6$ A mit jeweils ID 8,0 mm x 300 mm eingesetzt (Säulen. der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

Für die erfindungsgemäße Weiterverarbeitung besonders geeignet sind auch Polyacrylate, die eine enge Molekulargewichtsverteilung (Polydispersität < 4) haben. Diese Massen werden bei relativ niedrigem Molekulargewicht nach dem Vernetzen besonders scherfest. Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 100 36 901 A1 beziehungsweise US 2004/092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 0 826 698 A1; EP 0 824 110 A1; EP 0 841 346 A1; EP 0 850 957 A1) eingesetzt werden. Die unterschiedlichen Möglichkeiten der ATRP sind ferner in den Schriften US 5,945,491 A, US 5,854,364 A und US 5,789,487 A beschrieben.

In einer weiteren sehr vorteilhaften Ausführungsform der Erfindung basiert die Matrix auf einer Silikonbasis, und zwar insbesondere einer Haftklebemasse, die chemisch oder physikalisch vernetzt ist. Insbesondere durch eine radikalische Vernetzung kann die zeitabhängige Alterung der Silikonhaftklebemasse, widergespiegelt durch steigende Kohäsion sowie verminderte Adhäsion, signifikant reduziert werden. Eine radikalische Vernetzung kann dabei vorteilhaft chemisch durch den Einsatz von BPO-Derivaten (Benzoylperoxid-Derivaten) und/oder durch den Einsatz von Elektronenstrahlen durchgeführt werden.

Sehr vorteilhaft weist die Silikonhaftklebemasse eine hohe Haftung auf unpolaren Substraten und Silikonkautschuken und/oder -schäumen sowie auf silikonisierten und/oder silikonhaltigen Untergründen auf. Besonders bevorzugt wird die Vernetzung der Silikonhaftklebeschicht mittels Elektronenbestrahlung bewirkt (Elektronenstrahlhärtung, ESH).

Als Silikonhaftklebemassen können erfindungsgemäß vorteilhaft kondensationsvernetzende Systeme umfassend Silikatharze und Polydimethyl- oder Polydiphenylsiloxane zum Einsatz kommen, weiterhin ebenfalls vorteilhaft additionsvernetzende Systeme umfassend Silikatharze, Polydimethyl- oder Polydiphenylsiloxane und Crosslinker (Vernetzersubstanzen, insbesondere funktionalisierte Hydrosilane).

Einige kommerziell erhältliche Beispiele für erfindungsgemäß hervorragend einsetzbare Silikonhaftklebemassen als Matrix sind, ohne durch die Aufzählung den Gegenstand der Erfindung beschränken zu wollen:

Kondensationsvernetzende Systeme: DC 280, DC 282, Q2-7735, DC 7358, Q2-7406 von Dow Corning, PSA 750, PSA 518, PSA 910 von GE Bayer Silikones, KRT 001, KRT 002, KRT 003 von ShinEtsu, PSA 45559 von Wacker Silikones sowie PSA 400 von Rhodia; additionsvemetzende Systeme: DC 7657, DC 2013 von Dow Corning, PSA 6574 von GE Bayer Silikones sowie KR 3700, KR 3701 von ShinEtsu.

In einer vorteilhaften Ausgestaltungsform umfasst die Matrix eine selbstklebrige Polymer beziehungsweise Polymermischung aus einer Monomermischung, die (Meth)Acrylsäurederivate umfasst, die jeweils zumindest eine funktionelle Gruppe aus der Menge umfassend Cyanogruppen und Nitrogruppen aufweisen. Durch Verwendung dieser Monomere ist es möglich, Polymere zu erhalten, die einerseits selbstklebrig sind, deren relative Permittivität sich andererseits durch Änderung des Massenanteils dieser Monomere im resultierenden Polymer über einen breiten Bereich variieren lässt. Wichtig ist es bei der Verwendung dieser besonderen Monomere allerdings, dass diese zu einem Massenanteil von mindestens 45 Gew.-% in dem Polymer enthalten sind, damit ein Polymer erhalten wird, das die besonders bevorzugte relative Permittivität von mehr als 4,5 aufweist.

Es hat sich als besonders günstig herausgestellt, wenn die zumindest eine Cyanogruppe und/oder Nitrogruppe aufweisenden (Meth)Acrylsäurederivate im selbstklebrigen Polymer zu einem Massenanteil von maximal 90 Gew.-% vorliegen, da die resultierenden Polymere bei einem höheren Massenanteil nicht mehr hinreichend selbstklebrig sind, um als Basispolymer einer Selbstklebemasse dienen zu können. Insbesondere zeigt sich, dass die Polymere bis zu einem Gehalt an derartigen Monomeren von etwa 70 Gew.-% noch hervorragend haftklebrig, bis zu einem Gehalt von etwa 80 Gew.-% noch sehr gut heißschmelzklebrig und bei einem Gehalt zwischen 80 Gew.-% und 90 Gew.-% gerade noch heißschmelzklebrig sind. Je nach der konkreten Anwendung werden selbstklebrige Polymere mit einer hervorragenden Eignung als Basispolymer einer Selbstklebemasse, die gleichzeitig eine exzellente Leuchtdichte aufweist, insbesondere dann erhalten, wenn der Massenanteil der zumindest eine Cyanogruppe und/oder Nitrogruppe aufweisenden (Meth)Acrylsäurederivate zwischen 50 Gew.-% und 60 Gew.-% beträgt. Die Polymere können dabei beliebig ausgebildet sein etwa als Blockcopolymere oder statistische Polymere.

Besonders gute Ergebnisse werden erzielt, wenn das Polymer, das als Matrix eingesetzt wird, Monomere enthält, die ausgewählt sind aus der Gruppe umfassend unsubstituiertes oder substituiertes Cyanomethylacrylat, Cyanoethylacrylat, Cyanomethylmethacrylat, Cyanoethylmethacrylat und (Meth)Acrylsäurederivate mit O-(per)cyanoethylierten Sacchariden. In diesem Fall werden selbstklebrige Polymere erhalten, die eine signifikant höhere Langzeitstabilität aufweisen als herkömmliche selbstklebende Polymere. Dies äußert sich in einer relativen Permittivität des Polymers, die über einen deutlich längeren Zeitraum zumindest im Wesentlichen konstant bleibt, und darüber hinaus in einer erheblich langsameren zeitlichen Abnahme der Leuchtdichte bei einem Einsatz dieser Polymere als Matrix der Leuchtschicht. Erfindurigsgemäß ist die relative Permittivität der Matrix beziehungsweise des zur Herstellung der Matrix verwendeten Polymers, der Haftklebemasse oder Silikons größer als 4,5.

Des weiteren ist es von Vorteil, wenn das selbstklebrige Polymer ein Polymer aus einer Monomermischung ist, die ferner substituierte und/oder unsubstituierte (Meth)Acrylsäureester der allgemeinen Formel $CH_2=CR^1$-$COOR^2$ umfasst, wobei $R^1$ ausgewählt wird aus der Gruppe umfassend H und $CH_3$ und $R^2$ ausgewählt wird aus der Gruppe umfassend substituierte und unsubstituierte Alkylketten mit 1 bis 20 Kohlenstoffatomen. Auf diese Weise wird ein selbstklebriges Polymer erhalten, dessen klebtechnischen Eigenschaften über einen weiten Bereich variieren und so an die konkreten Anforderungen angepasst werden können. Noch bessere Variationsmöglichkeiten für die klebtechnischen Eigenschaften ergeben sich, wenn das selbstklebrige Polymer ein Polymer aus einer Monomermischung ist, die ferner olefinisch ungesättigte Monomere mit funktionellen Gruppen aufweist.

Ferner können als zumindest eine Nitrogruppe aufweisende (Meth)Acrylsäurederivate grundsätzlich alle üblichen und geeigneten Verbindungen zur Herstellung der Matrix eingesetzt werden. Gleichfalls können als zumindest eine Cyanogruppe aufweisende (Meth)Acrylsäurederivate grundsätzlich alle üblichen und geeigneten Verbindungen gewählt werden. Bei Verwendung von Monomeren, die Cyanogruppen aufweisen, wird ein besonders polares Polymer erhalten, das jedoch weder feuchtigkeitsempfindlich oder wasserlöslich noch hygroskopisch ist und dabei eine allenfalls geringe Wasseraufnahme zeigt. Als Monomere mit Cyanogruppen können etwa solche der allgemeinen Formel $CH_2=C(R^a)(COOR^b)$ eingesetzt werden, wobei $R^a$ bei Acrylsäure oder einem Acrylsäurederivat H darstellt und bei Methacrylsäure oder einem Methacrylsäurederivat $CH_3$ darstellt, und wobei $R^b$ ein Rest ist, der sich von der allgemeinen Formel -$(CH_2)_c$-CH(CN)-$(CH_2)_d$-H ableitet, wobei c = 0 bis 10 und d = 0 bis 10 sein kann, also beispielsweise - ohne sich durch diese Aufzählung einzuschränken - Cyanomethylacrylat, Cyanoethylacrylat, Cyanomethylmethacrylat und Cyanoethylmethacrylat. Zusätzlich zu oder anstelle von diesen Cyanoalkyl(meth)acrylaten lassen sich auch andere cyanofunktionalisierte (Meth)Acrylsäurederivate einsetzen, zum Beispiel solche, in denen der obige Rest $R^b$ einen O-(per)cyanoethylierten Zuckerbaustein enthält (also ein Saccharid, in dem eine Hydroxygruppe, mehrere Hydroxygruppen oder alle Hydroxygruppen als Cyanoethanolether vorliegt beziehungsweise vorliegen), zum Beispiel O-percyanoethyliertes 2-(Glykosyloxy)ethylacrylat oder korrespondierende di-, oligo- und Polysaccharide. Anstelle von oder zusätzlich zu Glucose kann bei diesen Verbindungen natürlich auch von anderen Sacchariden ausgegangen werden, etwa von Mannose, Xylose und dergleichen.

Statt einer Verwendung von Monomeren mit Cyanogruppen und/oder Nitrogruppen ist es aber auch möglich, ein auf (Meth)Acrylaten basierendes haftklebriges Polymer unter Verwendung von anderen Monomeren zu erzeugen, die ebenfalls eine hohe relative Permittivität aufweisen, beispielsweise Vinylidenhalogenide, bei denen der obige Rest $R^b$ zum Beispiel sich von der allgemeinen Formel -$(CH_2CX_2)_n$-$CH_3$ herleitet, wobei n = 1 bis 50 und X ausgewählt wird aus der Gruppe umfassend F, Cl und Br.

Auf diese Weise lassen sich demnach Polymere für die Matrix der Leuchtschicht erhalten, die nicht nur selbstklebrig sind und eine entsprechende relative Permittivität aufweisen, sondern auch hervorragende Isolationseigenschaften, niedrige (oder - für Spezialanwendungen -hohe) Verlustfaktoren und hohe optische Transparenzen aufweisen.

Neben derartigen (Meth)Acrylat-basierenden Polymeren können jedoch grundsätzlich auch alle anderen Polymere für die Matrix der Leuchtschicht verwendet werden, die für Selbstklebemassen üblicherweise zum Einsatz kommen. In diesem Zusammenhang seien beispielhaft Selbstklebemassenpolymere auf Polysiloxanbasis, auf Polyesterbasis, auf Synthesekautschukbasis und/oder auf Polyurethanbasis genannt, ohne sich durch diese Angabe unnötig zu beschränken. Geeignete Haftklebemassenpolymere sind auch solche auf Blockcopolymerbasis, etwa Acrylatblockcopolymere oder Styrolblockcopolymere. Derartige Klebemassen sind aus dem Stand der Technik hinreichend bekannt, wobei auch bei diesen die relative Permittivität durch den Einsatz funktionalisierter Monomere mit Cyano-, Halogen- oder Nitro-Gruppen gezielt erhöht werden kann.

Es sind insbesondere Acrylat-basierende Polymere geeignet, die etwa durch radikalische Polymerisation erhältlich sind und die mindestens ein Acrylmonomer der allgemeinen Formel $CH_2=C(R^1)(COOR^2)$ enthalten, wobei $R^1$ gleich H oder ein $CH_3$-Rest ist und $R^2$ gleich H ist oder aus der Gruppe der gesättigten, unverzweigten oder verzweigten, substituierten oder unsubstituierten $C_1$- bis $C_{20}$-Alkylreste gewählt ist.

Spezifische Beispiele, ohne sich durch diese Aufzählung einzuschränken, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere, beispielsweise Isobutylacrylat, 2-Ethylhexylacrylat, 2-Ethylhexylmethacrylat, Isooctylacrylat oder Isooctylmethacrylat.

Weitere einsetzbare Verbindungsklassen, die üblicherweise allerdings nur in einem geringen Stoffmengenanteil verwendet werden, sind monofunktionelle Acrylate beziehungsweise Methacrylate, wobei der Rest $R^2$ aus der Gruppe der überbrückten oder nicht überbrückten Cycloalkylreste mit mindestens sechs Kohlenstoffatomen gewählt ist. Die Cycloalkylreste können auch substituiert sein, beispielsweise durch $C_1$- bis $C_6$-Alkylgruppen. Spezifische Beispiele sind Cyclohexylmethacrylat, Isobornylacrylat, Isobornylmethacrylat und 3,5-Dimethyladamantylacrylat.

In einer bevorzugten Vorgehensweise werden Acrylmonomere und/oder Comonomere eingesetzt, die einen oder mehrere Substituenten aufweisen, insbesondere polare Substituenten, beispielsweise Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy- und Ethergruppen.

Es lassen sich nach einer vorteilhaften Ausgestaltung ferner Polymere einsetzen, die aus einer Monomermischung hergestellt werden, die zusätzlich zu dem Acrylmonomer olefinisch ungesättigte Monomere mit funktionellen Gruppen als Comonomere aufweist. Diese können beispielsweise gewählt werden aus der Gruppe umfassend Vinylverbindungen mit funktionellen Gruppen (beispielsweise Vinylester, Vinylether, Vinylhalogenide, Vinylidenhalogenide, Vinylverbindungen mit aromatischen Cyclen und Heterocyclen in alpha-Stellung), Maleinsäureanhydrid, Styrol, Styrol-Verbindungen, Vinylacetat, Acrylamide und mit Doppelbindung funktionalisierte Photoinitiatoren, ohne sich durch diese Aufzählung einzuschränken.

Grundsätzlich als funktionale Comonomere geeignete Monomere sind moderat basische Comonomere wie einfach oder zweifach N-alkylsubstituierte Amide, insbesondere Acrylamide. Spezifische Beispiele sind hier N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid und N-Isopropylacrylamid, wobei auch diese Aufzählung nicht abschließend ist.

Weitere bevorzugte Beispiele für derartige Comonomere sind (in einer ebenfalls nicht abschließenden Aufzählung) Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Glycerylmethacrylat, 6-Hydroxyhexylmethacrylat, Vinylessigsäure, Tetrahydrofurfurylacrylat, beta-Acryloyloxypropionsäure, Trichl.oracrylsäure, Fumarsäure, Crotonsäure, Aconitsäure und Dimethylacrylsäure.

In einer weiteren bevorzugten Vorgehensweise werden als Comonomere Vinylverbindungen, insbesondere Vinylester, Vinylether, Vinylhalogenide, Vinylidenhalogenide sowie Vinylverbindungen mit aromatischen Cyclen und Heterocyclen in Alphastellung eingesetzt, wobei als nicht ausschließende Beispiele etwa Vinylacetat, Vinylformamid, 4-Vinylpyridin, Ethylvinylether, Vinylchlorid, Vinylidenchlorid, Styrol, N-Vinylphthalimid, Methylstyrol, 3,4-Dimethoxystyrol, 4-Vinylbenzoesäure und Acrylnitril genannt seien.

Besonders vorteilhaft kann das mindestens eine Comonomer ein Photoinitiator mit einer copolymerisierbaren Doppelbindung sein, insbesondere ausgewählt aus der Gruppe enthaltend Norrish-I-Photoinitiatoren, Norrish-II-Photoinitiatoren, Benzoinacrylate oder acrylierte Benzophenone.

Gemäß eines besonders bevorzugten Aspektes der vorliegenden Erfindung enthält das Flächenelement zusätzlich zu den vorgenannten oder nachstehenden Merkmalen in den Gitternetzzwischenräumen des Gitternetzes, insbesondere mit einer vorstehend offenbarten Maschenweite, eine organische, flexible und gegebenenfalls leitfähige Polymermasse. In einer besonders vorteilhaften Ausführungsform werden die Zwischenräume der Metallgewebe oder auch der Gewebe, insbesondere leitfähigen Gewebe, polymerer Filamente mit einer organischen flexiblen Beschichtung aus beispielsweise Baytron ausgefüllt, um das elektrische Feld homogener werden zu lassen. Bei einem homogeneren Feld kann eine höhere Leuchtkraft erzielt werden. Eine besonders bevorzugte Polymermasse ist Baytron® der Firma Bayer. Eine Baytron FE-Lösung basiert auf einer Lösung von Poly(3,4-ethylendioxythiophene)-poly(styrenesulfonaten) in einem Gemisch aus Wasser und Ethanol. Bei Beschichtung eines Gewebes einer Maschenweite von 250 $\mu$m mit einer 2,5 Gew.-% Baytron FE-Lösung verstärkt sich beispielsweise die Leuchtkraft um den Faktor 10.

Die organische, flexible und leitfähige Polymermasse in den Gitternetzzwischenräumen beziehungsweise Maschenzwischenräume führt zu einer Abschwächung der Inhomogenität des Feldes, die sich mit zunehmendem Gitternetzabstand/Maschenweite vergrößert. Die zunehmende Inhomogenität bei größer werdendem Gitternetzabstand führt zu einer abnehmenden Leuchtdichte. Durch Verwendung der leitfähigen Polymermasse kann die Leuchtdichte etwa um den Faktor 10 im Vergleich zum gleichen Flächenelement ohne leitfähige Polymermasse gesteigert werden. Durch die Auffüllung der Zwischenräume mit der leitfähigen Polymermasse, wie beispielsweise Baytron®, kann der Effekt, dass sich die Inhomogenität des Feldes mit zunehmender Maschenweite vergrößert und die Leuchtdichte damit abnimmt, abgeschwächt werden. Die leitfähige Polymermasse überbrückt die ursprünglich vorhandenen Inhomogenitäten und ermöglicht auch große Maschenweiten mit höherer Leuchtdichte.

Als Polymermasse sind grundsätzlich alle Polymermassen einsetzbar, die eine hinreichende elektrische Leitfähigkeit aufweisen und einen durch diese Polymermasse fließenden elektrischen Strom im Wesentlichen zersetzungsfrei leiten und transparent sind. Entsprechende Polymermassen sind dem Fachmann hinlänglich bekannt; diese können hinsichtlich der elektrischen Leitfähigkeit durch Maßnahmen angepasst werden, die dem Fachmann ebenfalls hinreichend bekannt sind. So sind dem Fachmann viele weitere leitfähige Polymere mit konjugierten Doppelbindungen bekannt, die ebenfalls für den oben beschriebenen Effekt verwendet werden können. Als Beispiele seinen hier die Polymere Polyacetylen, Polypyrrol, Polyphenylenvinylen, Polyanilin, Polyfluoren, Polythiophen und deren Kombinationen genannt. Abgesehen von Polyacetylen beruht die elektrische Leitfähigkeit auf dem Mechanismus der Defektelektronen Leitung, bei der das Polymer unter Zusatz von negativ geladenen Gegenionen partiell oxidiert wird.

Ferner können die Polymermassen beispielsweise intrinsisch leitende Polymere enthalten (als Basispolymer oder als zusätzlichen Rezeptierungsbestandteil). Besonders günstig ist es allerdings, wenn die Polymermassen elektrisch leitende Füllstoffe enthalten. Ein elektrisch leitender (elektrisch leitfähiger) Füllstoff ist eine Beimengung zu einer Polymermasse, die elektrischen Strom entweder bereits für sich alleine (also ohne Polymermasse) leitet oder auch erst in der Mischung mit der Polymermasse. Als elektrisch leitende Füllstoffe können vorzugsweise die vorstehend eingehend erläuterten Füllstoffe in der Polymermasse vorliegen. Voraussetzung ist, dass die elektrisch leitfähige Polymermasse im Wesentlichen durchlässig für Strahlung im UV/Vis-Bereich ist.

Ein weiterer Ansatzpunkt zur Verbesserung der Leuchtdichte ist die kombinierte Verwendung von optimierten transparenten, flächigen Elektroden, besonders bevorzugt von metallischen Geweben oder auch polymeren Geweben mit einer leitfähigen Beschichtung und mit einer EL-Haftklebemasse (elektrolumineszierende Haftklebemasse beziehungsweise EL-Partikel in Matrix) mit einer hohen Dielektrizitätskonstante. Durch diese Maßnahmen sind erheblich größere Leuchtdichte erzielbar.

Entsprechend einer weiteren erfindungsgemäßen alternativen Ausführungsform ist das Flächenelement ein Schild, insbesondere ein Kennzeichenschild für Kraftfahrzeuge, und der Grundkörper des Schildes bildet zumindest teilweise die Rücketektrode oder das Flächenelement ist auf den Grundkörper eines Schildes, insbesondere eines Kennzeichenschilds für Kraftfahrzeuge, aufgebracht. Als Schild wird ein Flächenelement angesehen, dessen Rückelektrode auf einen selbsttragenden Grundkörper aufgebracht ist oder mit einem selbstragenden Grundkörper verbunden ist. Dabei ist der Grundkörper vorzugsweise tiefziehfähig beziehungsweise plastisch verformbar. Besonders bevorzugt erfüllt das Flächenelement und damit auch der Grundkörper eine oder mehrere Anforderungen der DIN 74069:1996-07.

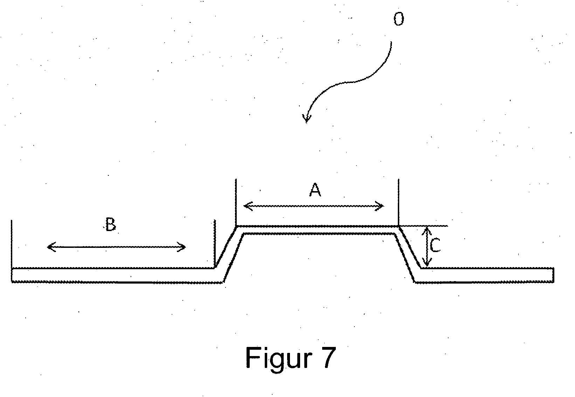

Der erfindungsgemäße Effekt der transparenten, flächigen Elektrode im Flächenelement offenbart sich nach einer ein-, zwei- oder dreidimensional plastischen Verformung des Flächenelementes dadurch, dass die Leuchtdichte des Flächenelementes im Wesentlichen unverändert ist. Durch den Einsatz der Elektrode kommt es bei der plastischen Verformung zu keinen Rissen in der Elektrode und die Homogenität des Wechselspannungsfeldes ändert sich im Wesentlichen nicht. Der erfindungsgemäße Vorteil zeigt sich daher darin, dass unter Anwendung von äußerem Druck das Flächenelement ein-, zwei- oder dreidimensional plastisch verformbar ist und die Leuchtdichte, insbesondere einer geprägten Fläche A und/oder einer Hintergrundfläche B (siehe beispielsweise Figur 7), vor und nach der plastischen Verformung im Wesentlichen gleich ist. Dieser Vorteil zeigt sich auch noch, wenn in das Flächenelement ein Motiv, wie ein Buchstabe oder eine Zahl, mit einer Prägehöhe C von 0,001 mm bis 10 mm geprägt wird. Ferner kann dieser Effekt auch noch bei Motiven mit einer Prägehöhe um 0,5 bis 5 mm, bevorzugt um 0,5 bis 3 mm, besonders bevorzugt von 0,75 bis 2,5 mm, besser um 0,8 bis 2,25 mm beobachtet werden, ohne dass sich die Leuchtdichte vor und nach der Prägung wesentlich verändern.

Folglich ist nach einer erfindungsgemäßen Alternative Gegenstand der Erfindung, ein elektrolumineszierendes Kennzeichenschild mit einer flächigen, transparenten Elektrode mit einem oder mehreren der vorstehenden Merkmale als Frontelektrode, mit einer Leuchtschicht mit einer Matrix mit Leuchtpartikeln, die unter Einwirkung eines elektrischen Wechselspannungsfelde lumineszieren, und gegebenenfalls mit mindestens einer dielektrischen Schicht sowie mit einer flächigen Rückelektrode, wobei die Rückelektrode dem Grundkörper des Kennzeichenschildes zumindest teilweise entspricht oder auf den Grundkörper aufgebracht ist, und die Rückelektrode, die Frontelektrode und/oder der Grundkörper auf der nach außen und/oder innen weisenden Seite mit einer elektrisch isolierenden Schicht versehen sind. Je nach Anforderungsprofil kann das Kennzeichenschild auch einen eingangs erläuterten Mehrschichtaufbau aufweisen, um die Leuchtdichte zu steigern oder eine mehrfarbige Beleuchtung des Kennzeichenschildes zu ermöglichen.

Ferner ist es bevorzugt, wenn das Kennzeichenschild auf der Vorderseite auf der Elektrode eine Folie oder eine Beschichtung zur Isolation und/oder als Schutzschicht gegen Schmutz, Kratzer oder chemische Einflüsse aufweist. Diese Folie kann in einer vorteilhaften Ausführungsform auch reflektierend, besser retroreflektierend sein. Entsprechendes gilt auch für die Außenseite der Rückelektrode. Als Folien kommen auch selbstklebende Folien in Betracht, um das Kennzeichenschild auf transparente Halterungen auf Seiten der Frontelektrode oder auf einer anderen Halterung mit auf Seiten der Rückelektrode aufzubringen.

Gemäß einer weiteren Alternative ist ebenfalls Gegenstand der Erfindung die Verwendung der Elektrode mit den vorstehend genannten Merkmalen, die sie einzeln oder auch in Kombination aufweisen kann, als flächige Frontelektrode zur Herstellung eines Flächenelementes mit einem oder mehreren der vorstehend genannten Merkmalen oder eines Kennzeichenschildes, insbesondere wie vorstehend erläutert, indem in einem ersten Schritt, gegebenenfalls zwischen zwei Trennschichten, die jeweils einem Transferpapier (TP) entsprechen können,

- eine flächige Rückelektrode, die gegebenenfalls ein- oder beidseitig mit elektrisch isolierenden Schichten versehen ist, einseitig mit einer Leuchtschicht unter Einwirkung von Hitze und/oder Druck verbunden wird, wobei die Leuchtschicht auf der der Trennschicht zugwandten Seite einseitig mit einem flächigen Transferelement versehen ist, und
- Erhalt eines ersten Laminates zwischen zwei Trennschichten umfassend die Schichtabfolge Transferelement, Leuchtschicht, flächige Rückelektrode, die gegebenenfalls ein- oder beidseitig mit elektrisch isolierenden Schichten versehen ist, und
- in einem zweiten Schritt, nach Entfernen des flächigen Transferelements von der Leuchtschicht, die flächige Frontelektrode unter Einwirkung von Hitze und/oder Druck eingefügt wird und zum Flächenelement oder zum Kennzeichenschild verbunden wird, umfassend die Schichtabfolge flächige Frontelektrode, Leuchtschicht, flächige Rückelektrode, die gegebenenfalls ein- oder beidseitig mit elektrisch isolierenden Schichten versehen ist.

Erfindungsgemäß ist die Rückelektrode einseitig mit einer PE-Folie auf der der Trennschicht zugewandten Oberfläche versehen. Dem Fachmann ist geläufig, dass die äußere Oberfläche der Rückelektrode mit jeder geeigneten Folie oder Beschichtung versehen sein kann. Diese können in einem weiteren vorangehenden oder nachfolgenden Schritt auf die Frontelektrode und/oder Rückelektrode als schützende und/oder isolierende Beschichtung aufgebracht werden. Alternativ können auch mit Folien oder Beschichtungen versehene Front- und/oder Rückelektrode eingesetzt werde. Je nach Zweck schützen und/oder isolieren sie die später außen liegende Seite der Elektroden oder dienen als Dielektrikum zwischen den Elektroden. Weitere isolierende Schichten oder Coatings auf einer oder beiden Seiten der flächigen Frontelektrode und/oder Rückelektrode können je nach späterem Anwendungszweck von Vorteil sein.

Ferner ist das Aufbringen einer Reflexionsfolie, besser retroreflektierenden Folie, insbesondere einer transparenten Reflexionsfolie oder besser retroreflektierenden Folie, auf das erfindungsgemäße Flächenelement besonders bevorzugt, und zwar wird die Reflexionsfolie oder besser retroreflektierenden Folie vorzugsweise außen auf die Frontelektrode, gegebenenfalls mit Zwischenschicht und/oder äußerer Schutzschicht, aufgebracht. Gleichfalls ist es besonders bevorzugt, wenn das erfindungsgemäße elektrolumineszierenden Kennzeichenschild mit einer Reflexionsfolie, insbesondere einer transparenten Reflexionsfolie versehen ist, vorzugsweise ist die Frontelektrode auf ihrer nach außen weisenden Oberfläche, gegebenenfalls mit Zwischenschicht, mit dieser Reflexionsfolie versehen. Die Reflexionsfolien erfüllen vorzugsweise die Anforderungen beziehungsweise Normen für KFZ-Kennzeichen.

Nach dem zweiten Schritt kann das Flächenelement oder das Kennzeichenschild gestanzt, verpackt und/oder geprägt werden. Die Trennschichten können nach Durchführung des zweiten Schrittes abgenommen werden oder weiter als Schutz bei der weiteren Verarbeitung am Flächenelement oder am Kennzeichenschild verbleiben.

Gegenstand der Erfindung ist die Verwendung der Elektrode mit einem oder mehreren der vorgenannten Merkmalen als transparente Frontelektrode eines elektrolumineszierenden Flächenelements, wie einer EL-Lampe, und/oder als transparente Frontelektrode eines Kennzeichenschildes, mit den vorstehend dargelegten Merkmalen, oder einer Solarzelle.

Zur Realisierung der vorliegenden Erfindung ist es jedoch zwingend erforderlich, dass das Flächenelement insgesamt verformbar ist. Dies wird dadurch erreicht, dass das Flächenelement eine besonders verformbare Leuchtschicht oder weitere Schichten aufweist. Die Verformbarkeit der Schichten kann sich aus der Verwendung von bestimmten Polymermassen ergeben, die die Schichten enthalten. So ist es zum einen erforderlich, dass die Polymermasse auf der Basis von Elastomeren und/oder von plastischen Polymeren ist.

Als Elastomere bezeichnet man elastisch verformbare und dabei formfeste Polymere mit einer Glasübergangstemperatur unterhalb der Raumtemperatur. Ein Körper aus einem Elastomer verformt sich unter einer einwirkenden Deformationskraft elastisch, kehrt aber wieder in seine ursprüngliche unverformte Gestalt zurück, wenn die Deformationskraft fortfällt. Dies beinhaltet im Sinne der Anmeldung ebenfalls viskoelastische Polymere, die ein Verhalten besitzen, das zum Teil elastisch und zum Teil viskos ist, so dass der Körper nach Wegfall der Deformationskraft nur teilweise (unvollständig) wieder seine ursprüngliche Gestalt annimmt und die verbliebene Deformationsenergie dann innerhalb eines viskosen Fließvorgangs abgebaut wird.

Als plastisches Polymer bezeichnet man Polymere, die sich unter einer einwirkenden Deformationskraft plastisch verformen, wobei die Verformung auch nach Fortfall der Deformationskraft vollständig oder zumindest teilweise bestehen bleibt.

Ferner sollten vorzugsweise eine verwendete Polymermasse und/oder die elektrisch leitende Tinte, Lack oder Druckfarbe jeweils bei einer Dehngeschwindigkeit von 300 mm/min eine Reißdehnung von mehr als 20 % aufweisen, insbesondere von mehr als 50 % oder sogar von mehr als 100 % und außerdem einen Zug-Elastizitätsmodul von weniger als 1000 MPa oder sogar von höchstens 100 MPa besitzen.

Die Reißdehnung (Bruchdehnung) ist eine Kennzahl für die mechanische Belastbarkeit und Verformungsfähigkeit von Werkstoffen. Dieser Materialkennwert gibt die bleibende prozentuale Längenänderung eines Probenkörpers an (bezogen auf dessen anfängliche Länge), die dieser bei einem Bruch infolge mechanischer Überbelastung aufweist.

Die Zugfestigkeit beschreibt den Widerstand eines Körpers, vorliegend - insbesondere eines Körpers - des elektrisch leitenden Materials des Elements, gegen Zugkräfte (auch Zerreißfestigkeit). Diese Bezeichnung verwendet man auch zur Definition der Höchstzugspannung als diejenige Kraft pro Einheit Querschnittfläche (gemessen in Newton pro Quadratzentimeter beziehungsweise Newton pro Quadratmillimeter), der ein Körper bis zum Bruch beziehungsweise Riss standhalten kann. Die Zugfestigkeit ist die maximale Gewichtsbelastung während des Zugversuchs, bezogen auf den Trägerquerschnitt, hier u.a. des elektrisch leitenden Materials des Elements, dies kann der Drahtquerschnitt sein, im Ausgangszustand (Breite mal Dicke). Die Zugfestigkeit ist bezogen auf einen Körper eines Materials, welcher einen Querschnitt von 1 $mm^2$ hat. Erfindungsgemäß hat das elektrisch leitende Material des Elements bei Raumtemperatur (20 bis 25 °C) eine Zugfestigkeit zwischen 5 bis 2500 N/$mm^2$, nach DIN EN 689.2-1, insbesondere weist die Zugfestigkeit des elektrisch leitenden Materials, insbesondere eines Körpers dieses Materials, mit einem Querschnitt von 1 $mm^2$

entsprechende Werte in diesem Bereich auf. Auf den Offenbarungsgehalt der DIN EN 6892-1 wird vollständig Bezug genommen und zum Inhalt des vorliegenden Dokumentes gemacht. Zugfestigkeit oder Höchstkraft entsprechen der DIN EN ISO 6892-1 gemäß Punkt 3.9 und Punkt 3.10:1. Die Messung erfolgt nach DIN EN ISO 6892-1 Punkt 6.2-c (Draht-Stäbe-Profile kleiner < 4 mm), Verfahren A (Prüfgeschwindigkeit basierend auf Dehngeschwindigkeitsregelung nach Punkt 10.3). Die Prüfverfahren werden bei Raumtemperatur durchgeführt. Die DIN EN ISO 6892-1 für metallische Werkstoffe ersetzt die bisher geltende DIN EN 10002-1.

Dabei wird die Zugfestigkeit nicht nur durch das Material, sondern kann auch durch seine Vorbehandlung und seine Form beeinflusst. So werden die größten Zugfestigkeiten bei technischen Materialien erreicht, die sorgfältig wärmebehandelt wurden und in Form feiner Drähte vorliegen. Ein Beispiel dafür sind Stahllegierungen, besonders in Form von feinen Drähten. Bei solchen Drähten ist eine Zugfestigkeit um 370 N/mm$^2$ für Stahl (St 37), und generell für Drähte sind Zugfestigkeiten zwischen 100 und 2 060 N/mm$^2$ (Newton pro Quadratmillimeter) möglich, vorzugsweise bei Edelstählen von 1373 bis 2060 N/mm$^2$. Zur Ermittlung der Zugfestigkeiten wird zusätzlich zur DIN EN 6892-1, wie vorstehend erläutert, auf die alte DIN EN 1002, die durch die DIN EN 6892-1 teilweise ersetzt wurde, sowie ergänzend auf die DIN EN ISO 527-1/-2/-3 für Kunststoffe, teilweiser Ersatz für DIN 53455/7, auf die DIN EN ISO 1924-2, DIN EN ISO 13934-1, DIN EN ISO 13934-2 (Höchstzugkraft und Höchstzugkraftdehnung textiler Flächengebilde), DIN EN ISO 7500, DIN 29073-3 (Höchstzugkraft und -dehnung von Vliesstoffen) und ISO 5081 (Höchstzugkraft und Höchstzugkraftdehnung textiler Gewebe) hingewiesen. Die DIN EN 6892-1 betrifft die Prüfmethode für Metalldrähte. Für die Bestimmung der Zugfestigkeit von textilem Gewebe ist die DIN EN ISO 13934-1 anwendbar, und in den Kapiteln 8 bis 10 und Anhang A sind die Versuche detaillierter erläutert. Auf den Offenbarungsgehalt der genannten DIN EN-Normen wird vollständig Bezug genommen und zum Inhalt des vorliegenden Dokumentes gemacht.

Der Zug-Elastizitätsmodul (Elastizitätsmodul, Zugmodul, Elastizitätskoeffizient, Youngscher Modul) ist ein Materialkennwert, mittels dessen bei der Verformung eines Werkstoffs mit linear elastischem Verhalten der Zusammenhang zwischen Spannung und Dehnung beschrieben wird. Bei Werkstoffen mit nichtlinear-elastischem Verhalten wird vorliegend als Zug-Elastizitätsmodul der anfängliche Zug-Elastizitätsmodul bei Einsetzen der Zugbelastung verstanden. Der Betrag des Elastizitätsmoduls ist umso größer, je mehr Widerstand ein Material seiner Verformung entgegensetzt. Die Steifigkeit eines konkreten Körpers aus diesem Werkstoff hängt zusätzlich von der Verarbeitung und von der Geometrie des Körpers ab.

Reißdehnung und Zug-Elastizitätsmodul und Zugfestigkeit für Kunststoffe werden nach DIN EN ISO 527-3 bei Raumtemperatur mit einem definierten Probekörper (Typ 5) für eine Dehngeschwindigkeit von 300 mm/min bestimmt. Auf den Offenbarungsgehalt der DIN EN ISO 527-3 wird vollständig Bezug genommen und zum Inhalt des vorliegenden Dokumentes gemacht. Die DIN ISO 527-1 beschreibt Verfahren zur Bestimmung der Zugeigenschaften von Kunststoffen und Kunststoffverbunden. Zur Ermittlung der erfindungsgemäßen Eigenschaften der elektrisch leitenden Materialien wird somit bei metallischen Materialien auf die DIN EN ISO 6892-1 und für Kunstoffe auf die DIN EN ISO 527-3 angewendet.

Nachfolgend werden in exemplarischen, allgemeinen Anwendungsbeispielen und Versuchen die Vorteile der tiefziehfähigen Elektrode gegenüber einer konventionellen Elektrode in einem erfindungsgemäßen Flächenelement erläutert.

Die Figuren zeigen:

Figur 1: Aufbau Laminierung
Figur 2a: Schichtaufbau nach dem 2. Laminierschritt mit tiefziehfähiger Elektrode
Figur 2b: Schichtaufbau nach dem 2. Laminierschritt mit konventioneller ITO-Folie
Figur 3: Maschenweite vs Leuchtdichte
Figur 4: Abhängigkeit der Leuchtdichte des Flächenelementes von der Maschenweite und der Verwendung von Baytron.
Figur 5: Prägewerkzeug
Figur 6: Kennzeichenschild mit Grundkörper und Flächenelement vor Prägung.
Figur 7: Kennzeichenschild mit Grundkörper und Flächenelement nach Prägung.

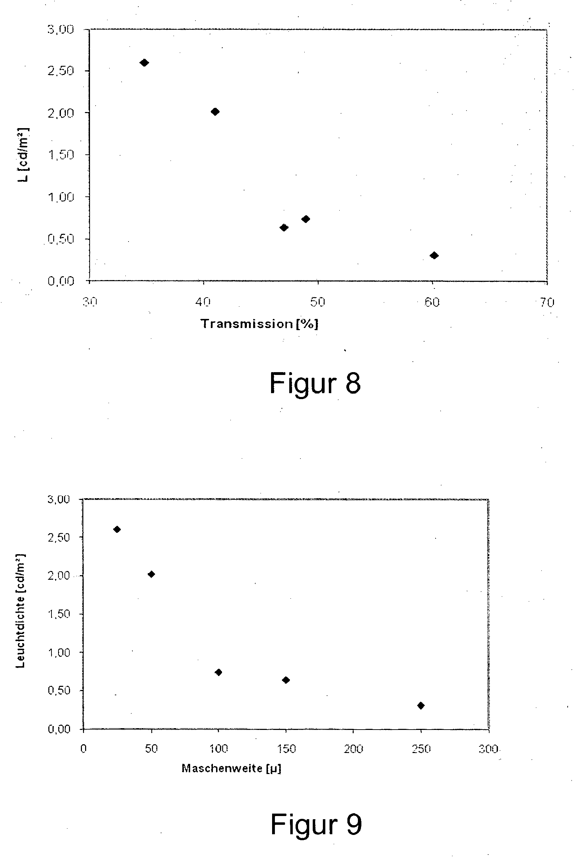

Figur 8: Abhängigkeit der Leuchtdichte von der Transmission, vgl. Tabelle 1.
Figur 9: Abhängigkeit der Leuchtdichte von der Maschenweite, vgl. Tabelle 1.

**Allgemeine Ausführungsbeispiele**

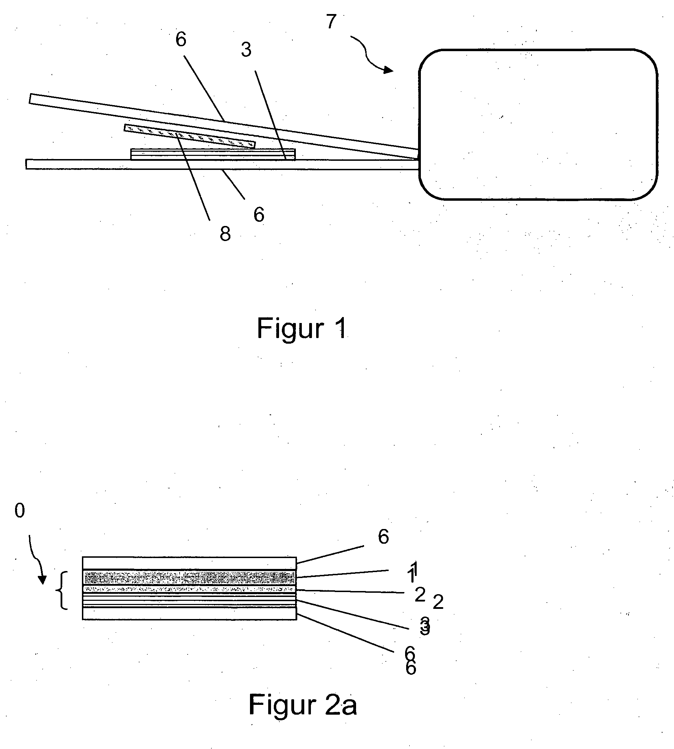

In Figur 1 ist die Verarbeitung unter Einwirkung von Hitze und Druck in einem Laminiergerät (7) dargestellt. Dazu wird zunächst die PET/Aluminium-Folie mit der Aluminiumbeschichtung auf der Oberseite zusammen mit einem nach unten offenen Transfertape (Leuchtschicht, versehen mit Trennfolie auf Oberseite, Folie der Unterseite ist ausgedeckt; 8) zwischen zwei Trennpapieren (6; TP, Prozesshilfsmittel) laminiert, indem das obere Trennpapier zusammen mit dem unteren Trennpapier in das Laminiergerät geschoben wird. Das obere Trennpapier wird dabei hochgehalten und das nach unten offene Transfertape (erste Trennfolie ist ausgedeckt) in Kontakt mit der PET/Aluminium-Folie gebracht. Damit es bei der Laminierung nicht zu einer Blasenbildung oder einem Faltenwurf kommt, wird das Transfertape möglichst lange vom von der Aluminiumfolie entfernt gehalten.

In einem zweiten Laminierschritt wird auch die zweite Seite des Transfertapes ausgedeckt (obere Trennfolie). Auf dem unteren Trennpapier wird die PET/Aluminium-Folie mit einer nach oben offenen Leuchtschicht aus Klebemasse und elektroluminieszierend en Partikeln vorgelegt und anstelle des Transfertapes vom ersten Laminationsschritt wird nun das metallische Gewebe der die ITO Folie auf die offene Klebemassenoberfläche laminiert. Im Falle von ITO zeigt die leitfähige Beschichtung zur Leuchtschicht.

Die Figur 2a zeigt zwischen den zwei Trennpapieren (6) ein erfindungsgemäßes Flächenelement (0) mit einer transparenten Gewebeelektrode (1), einer darunterliegenden Leuchtschicht (2) und der angrenzenden Aluminium-Folie mit PET-Schicht auf der Unterseite .In der Figur 2b ist ein Flächenelement mit einer ITO-Folie (9) dargestellt, die bei den späteren Prägeversuchen eingesetzt werden kann.

Aus der Kurve der Figur 3 ist der deutliche Einfluss der Maschenweite auf die erzielbare Leuchtdichte im Flächenelement (EL-Lampe) bei gleichbleibendem Drahtdurchmesser von 25 $\mu$m entnehmbar. Daher kann sowohl die Drahtdicke der Gewebe wie auch die Maschenweite weiter optimiert werden, um noch bessere Ergebnisse bei der Leuchtdichte bei gleichzeitiger Prägbarkeit des Flächenelementes zu erzielen. Das Optimum bei einem Drahtdurchmesser von um 25 $\mu$m liegt bei Maschenweiten zwischen 20 bis 70 $\mu$m, wobei mit Maschenweiten zwischen 20 bis 60 $\mu$m noch höhere Leuchtdichten erzielt werden.

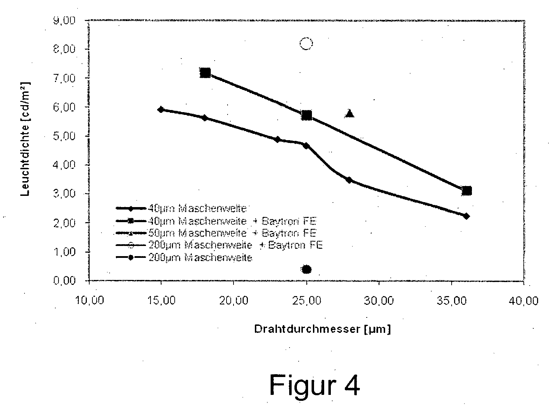

Den enormen Einfluss auf eine Steigerung der Leuchtdichte durch die Auffüllung der Maschenzwischenräume mit Baytron® unter sonst gleichem Aufbau des Flächenelements zeigt die Figur 4. Bei einer großen Maschenweite von 200 $\mu$m und einem Drahtdurchmesser von 25 $\mu$m kann der Wert der Leuchtdichte von 0,41 cd/m$^2$ bei gleicher offenen Fläche von 0,41 cd/m$^2$ (Figur 4: schwarzer Kreis) auf 8,21 cd/m$^2$ (Figur 4: weißer Kreis) gesteigert werden. Anhand der Figur 4 ist zu erkennen, dass im Falle der Ausfüllung der Gitterzwischenräume beziehungsweise Maschenzwischenräume mit Baytron® der Effekt, dass sich die Inhomogenität des Feldes mit zunehmender Maschenweite vergrößert und die Leuchtdichte damit abnimmt, abgeschwächt wird. Das Baytron überbrückt die ursprünglich vorhandenen Inhomogenitäten und ermöglicht auch große Maschenweiten mit höherer Leuchtdichte.

Bei Beschichtung einer 2,5 Gew.-% Baytron FE-Lösung mit einem Drahtrakel auf das Muster 2 mit 250 $\mu$m Maschenweite, woraus das Muster 8 resultiert, verstärkt sich die Leuchtkraft um den Faktor 10 auf 3,02 cd/m$^2$ (siehe Tabelle 1).

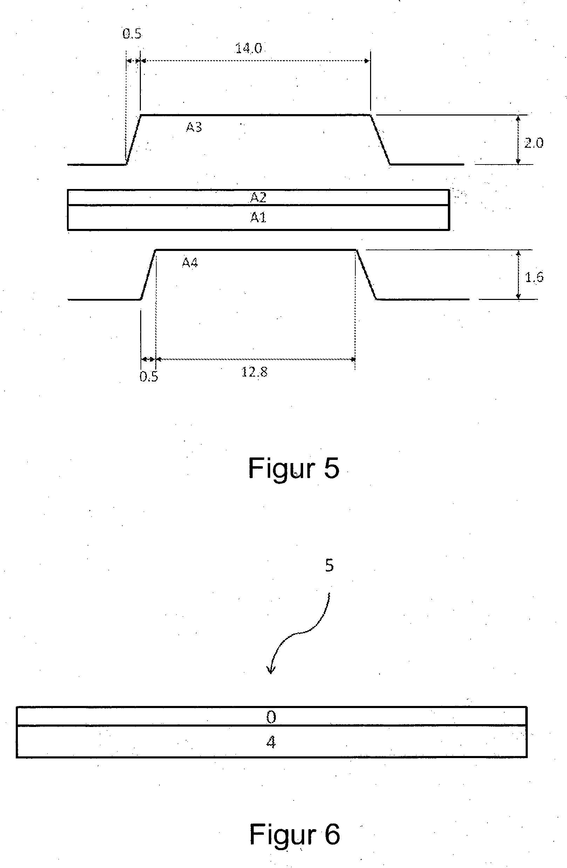

In Figur 5 ist abstrakt ein Prägewerkzeug nach DIN 74069 und eine EL-Lampe (A2) der Fläche 60 mm x 80 mm dargestellt, die auf einer 1 mm dicken Aluminiumplatine (A3, Figur 5; Grundkörper (4), Figur 6) aufgebracht ist. Geprägt wird für 10 Sekunden im kalten Zustand mit dem Prägewerkzeug. Für die Versuche wird ein großes B der Ausmaße 46 mm x 72 mm und einer Prägetiefe von 2 mm verwendet. Die Skizze des Prägewerkzeuges in Figur 5 zeigt als A4 einen Ausschnitt der Oberfläche der unteren Prägebacke und A3 einen Ausschnitt der Oberfläche der der oberen Prägebacke als Querschnittdarstellung. Der Ausschnitt zeigt eine der Linien, die Bestandteil des Buchstaben B sind.

In Figur 6 ist ein Kennzeichenschild (5) mit einem Grundkörper (4) und dem Flächenelement (0) vor der Prägung dargestellt. Das Kennzeichenschild weist weitere nicht dargestellte Beschichtungen oder Folien auf der Oberseite auf, um die Elektrode vor einer Beschädigung und Umwelteinflüssen zu schützen.

Der erfindungsgemäße Effekt der transparenten, flächigen Elektrode im Flächenelement offenbart sich nach einer ein-, zwei- oder dreidimensional plastischen Verformung des Flächenelementes (0) dadurch, dass die Leuchtdichte des Flächenelementes im Wesentlichen unverändert ist. Durch den Einsatz der Elektrode kommt es bei der plastischen Verformung zu keinen Rissen in der Elektrode und die Homogenität des Wechselspannungsfeldes ändert sich im Wesentlichen nicht. Der erfindungsgemäße Vorteil der Elektrode (1) zeigt sich nach Prägung eines Flächenelements (0), wie in Figur 7 schematisch dargestellt, darin, dass die Leuchtdichte des Flächenelements (0) nach einer ein-, zwei- oder dreidimensionalen plastischen Verformung im Wesentlichen gleich ist. Insbesondere ist die Leuchtdichte der geprägten Fläche (A) und/oder der Hintergrundfläche (B) mit einer Prägehöhe (C) vor und nach der plastischen Verformung im Wesentlichen gleich.

Dieser Vorteil zeigt sich auch noch, wenn in das Flächenelement (0) ein Motiv mit einer Prägehöhe (C) von 0,001 mm bis 10 mm geprägt wird. Ferner kann dieser Effekt auch noch bei Motiven mit einer Prägehöhe um 0,5 bis 5 mm, bevorzugt um 0,5 bis 3 mm, besonders bevorzugt von 0,75 bis 2,5 mm, besser um 0,8 bis 2,25 mm beobachtet werden, ohne dass sich die Leuchtdichte vor und nach der Prägung wesentlich verändern.

**Beispiele:**

**Herstellung der Masse der Beispiele:**

**Beispiel 1 zur Herstellung einer Matrix für die Leuchtschicht:**

Für radikalische Polymerisationen wurde ein konventioneller 200 L-Reaktor mit 4900 g Acrylsäure, 51 kg 2-Ethylhexylacrylat, 14 kg Methylacrylat und 53,3 kg Aceton/Benzin/Isopropanol (48,5:48,5:3) befüllt. Nach 45 Minuten Durchleiten mit Stickstoffgas (Entgasung der Startmischung) unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (90:10) verdünnt. Nach 6 und 8 h wurden jeweils 100 g Dicyclohexylperoxydicarbonat (Perkädox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Um aus dem so erhaltenen Polymer eine Klebemasse zu erzeugen, wurde das Reaktionsprodukt mit einer 3 %-igen Lösung von Aluminium(III)-acetylacetonat in Aceton (0,3 Gew.-%, bezogen auf die Masse des Polymers) abgemischt.

Eine alternative, besonders bevorzugt einsetzbare Matrix zur Herstellung der Leuchtschicht offenbart das Beispiel 2.

**Beispiel 2**

Zur Herstellung eines erfindungsgemäßen haftklebrigen Polymers auf Cyanoacrylatbasis, das eine relative Primitivität von mehr als 4,5 aufweist, wurden in einem Glasreaktor mit einem Fassungsvolumen von 2 L 300 g einer Mischung von 3 Gew.-% (3 Massen- oder Gewichtsprozent) Acrylsäure, 50 Gew.-% 2-Cyanoacrylat und 47 Gew.-% 2-Ethylhexylacrylat in 300 g eines Lösemittelgemischs aus Aceton und Isopropanol im Verhältnis 90:10 vorgelegt. Nach Entgasen der Reaktionslösung bei fünfundvierzigminütigem Hindurchleiten von Stickstoff unter Rühren wurde diese auf eine Temperatur von 58 °C erhitzt und 0,2 g 2,2'Azobis(2-methylbutyronitril) (Vazo 67™ der Firma DuPont) als Radikalstarter (Initiator) hinzugegeben. Nach der Zugabe wurde die Reaktionslösung auf eine Temperatur von 75 °C erhitzt und die Polymerisationsreaktion bei dieser Temperatur durchgeführt. Eine Stunde nach Beginn der Reaktion wurden der Reaktionsmischung weitere 0,2 g 2,2'Azobis(2-methylbutyronitril) hinzugefügt. Vier Stunden nach Beginn der Reaktion wurde die Reaktionsmischung mit 100 g des Lösemittelgemischs verdünnt. Weitere 100 g des Lösemittelgemischs wurden nach weiteren vier Stunden hinzugefügt (also acht Stunden nach Beginn der Reaktion). Zur Reduktion des restlichen in der Reaktionsmischung verbliebenen Monomers wurden der Reaktionsmischung acht und zehn Stunden nach Beginn der Reaktion jeweils 0,6 g Bis-(4-tert.-butylcyclohexanyl)-peroxy-dicarbonat (Perkadox 16™ der Firma Akzo Nobel) hinzugegeben. Vierundzwanzig Stunden nach Beginn der Reaktion wurde die Polymerisationsreaktion durch Abkühlen der Reaktionsmischung auf Raumtemperatur (23 °C) beendet. Um aus dem so erhaltenen Polymer eine Klebemasse zu erzeugen, wurde das Reaktionsprodukt mit einer 3 %-igen Lösung von Aluminium(III)-acetylacetonat in Aceton (0,3 Gew.-%, bezogen auf die Masse des Polymers) abgemischt.

**Herstellbeispiel Leuchtschicht:**

Herstellung von Transfertapes mit Leuchtschicht umfassend die Matrix mit Leuchtpartikeln, die auf der Ober- und Unterseite reversibel mit Folien versehen ist.

Die wie oben hergestellten Klebemassenlösungen wurden mit 50 Gew.-% EL-Partikeln bezogen auf das Polymer fest abgemischt und mittels Kommarakel auf eine silikonisierte Polyestertrennfolie der Dicke von 50 $\mu$m aufgebracht, so dass die Trockenschichtdicke 42 $\mu$m betrug. Nach Aufbringen der mit EL-Partikeln abgemischten Klebemassenlösung wurde das Muster 15 min bei 120 °C im Trockenschrank getrocknet und bis zur weiteren Verarbeitung mit einer weiteren 36 $\mu$m dicken siliconisierten Trennfolie abgedickt. Die beiden siliconisierten Polyesterfolien dienen lediglich zur Verarbeitung des Transfertapes und verbleiben später nicht im Zielartikel.

Zur Herstellung der nachstehenden Beispiele wurde die Klebemasse des Beispiels 1 verwendet.

**Herstellbeispiel EL-Lampe:**

Herstellung von Flächenelementen (EL-Lampe)

Es wird der Laminator "Ibico Pouchmaster 18 pro" verwendet.

Die Muster werden bei 175 °C und einer Geschwindigkeit von 0,7 m/min laminiert.

Größe der Muster:

|          |                     |
|----------|---------------------|
| Gewebe:  | 10,75 cm x 6.0 cm   |
| ITO:     | 10,75 cm x 6.0 cm   |
| PET/Al:  | 10,75 cm x 7.0 cm   |

Laminierung:

Zur Laminierung werden 2 Bögen Trennpapier der Größe DIN A4 (TP) geschnitten, die im Laminationsprozess als Prozesshilfe dienen. Auf das untere Trennpapier TP wird die PET/AL-Folie (Aluminium-Seite oben) gelegt. Es wird mit der Laminierung begonnen, indem das obere TP mit dem unteren TP in das Gerät geschoben wird. Das obere TP wird hochgehalten und mit der anderen Hand wird das nach unten offene Transfertape (EL-Haftklebemasse) (erste Trennfolie bereits ausgedeckt) in Kontakt mit der PET/AL-Folie gebracht. Um eine möglichst blasenfreie Laminierung zu erzielen, wird das Transfertape so lange wie möglich in von der beschichteten Alu-Folie entfernt gehalten (siehe Figur 1).

In einem zweiten Laminierschritt wird die zweite Trennfolie des Transfertapes ausgedeckt und wie im ersten Laminierschritt verfahren. Dabei befindet sich auf dem unteren TP die PET/AL-Folie mit einer nach oben offenen Schicht aus Klebemasse und EL-Partikeln und anstelle des Transfertapes wird die flächige, transparente Elektrode in Form eines metallischen Gewebes aus einem Stahl 1.4401 oder auch 1.4301 (siehe Tabelle 1, Figur 2a) oder die ITO (siehe Tabelle 1, Figur 2b) Folie auf die offene Klebemassenoberfläche laminiert. Der Unterschied der Leuchtkraft bei Verwendung der beiden unterschiedlichen Stahlgewebe ist nicht signifikant.

Messplan:

Für nachfolgende Messungen, beschrieben in den Tabellen 1 und 2 sowie der Figuren 3 und 4, wurde eine ACS Power-Source verwendet. Die nachfolgend beschriebenen Beispiele werden mit der Haftklebemasse nach Beispiel 1 aufgebaut. Die Leuchtdichte wird bei einer angelegten Spannung von 100 V mit einer Sinuswechselspannung mit einer Frequenz von 400 Hz gemessen.

**Tabelle 1:**

| Elektrode | M [μ] | d [μ] | Dicke [μ] | T [%] | Haze [%] | Material | $d_{Lappen}$ [μ] | $L_{100\,v}$ [cd/m²] | Muster Nr. |
|-----------|-------|-------|-----------|-------|----------|----------|--------|----------|-----------|
| Gewebe | 25 | 25 | 54 | 34,8 | 29,4 | 1.4401 | 38 | 2,60 | 4 |
| Gewebe | 50 | 36 | 83 | 41,0 | 22,9 | 1.4401 | 39 | 2,02 | 3 |
| Gewebe | 100 | 65 | 157 | 48,9 | 19,6 | 1.4301 | 41 | 0,74 | 5 |
| Gewebe | 150 | 100 | 200 | 47,0 | 16.9 | 1.4301 | 40 | 0,64 | 7 |
| Gewebe | 250 | 100 | 226 | 60,1 | 12,5 | 1.4301 | 40 | 0,31 | 2 |
| Gewebe | 250 | 100 | 226 | 60,1 | 12,5 | 1.4301 | 40 | 3,02 | 8 |
| ITO-PET-Folie Ref. 1 | - | - | 175 | 73,3 | 2,0 | PET/ITO | 39 | 12,00 | 1 |

Mit den Mustern 1 und 4 wurden Prägeversuche mit Zeichen durchgeführt. Auch nach dem Prägen ist die Funktionalität des Musters 4 nicht beeinträchtigt, während das Referenzmuster 1 in den Mittelflächen der Zeichen "B" oder "8" ausfiel, weil die ITO Schicht gebrochen ist.

Die Drahtdicke der Gewebe wie auch die Maschenweite können weiter optimiert werden, um die Leuchtdichte noch weiter zu steigern und gleichzeitig die Prägbarkeit des Flächenelementes zu gewährleiten. Ein weiterer Ansatzpunkt zur Verbesserung der Leuchtdichte ist die kombinierte Verwendung von optimierten transparenten, flächigen Elektroden, besonders bevorzugt von metallischen Geweben oder auch polymeren Geweben mit einer leitfähigen Beschichtung und mit einer EL-Haftklebemasse mit einer noch höheren Dielektrizitätskonstante. Durch diese Maßnahmen sind erheblich größere Leuchtdichten erzielbar. Alternativ oder zusätzlich können die Gitterzwischenräume der Elektrode mit einer leitfähigen Polymermasse versehen werden, wie nachstehend erläutert.

**Herstellung von Flächenelementen (EL-Lampe) mit leitfähiger Polymermasse in Gewebezwischenräumen**

In diesem Beispiel werden besonders vorteilhafte Ausführungsformen des Flächenelements hergestellt, indem in die Zwischenräume der Metallgewebe mit einer organischen flexiblen Beschichtung, aus beispielsweise Baytron®, ausgefüllt werden, um das elektrische Feld homogener werden zu lassen. Bei einem homogeneren Feld kann eine höhere Leuchtkraft erzielt werden. Bei Beschichtung einer 2,5 Gew.-% Baytron FE-Lösung mit einem Drahtrakel auf das Muster 2 mit 250 $\mu$m Maschenweite, woraus das Muster 8 resultiert, verstärkt sich die Leuchtkraft um den Faktor 10 auf 3,02 cd/m$^2$ (siehe Tabelle 1). Bei der Baytron FE-Lösung handelt es sich um eine Lösung von Poly(3,4-ethylendioxythiophene)-poly(styrenesulfonate) in einem Gemisch aus Wasser und Ethanol.

Dem Fachmann ist klar, dass bevorzugt auch die Elektrode als solche direkt mit einer leitfähigen Polymermasse versehen werden kann.

**Beispiele 1 bis 18 (siehe Tabelle 2):**

Als transparente Elektrode wurden Gewebe mit dem gleichen Material wie in den vorstehenden Beispielen verwendet. Die Maschenweite sowie die Drahtdicken sind in der nachfolgenden Tabelle 2 angegeben.

**Beispiele mit leitfähigem Polymer in den Gitternetzzwischenräumen (Tabelle 2, Reihe 3, Bsp. 14 bis 18):**

Vergleichsbeispiel (Nr: 19) mit ITO Folie

**Tabelle 2:**

| Beispiel | Maschenweite | $d_{Draht}$ | offene Fläche | T | $L_{100\,V}$ [cd/m$^2$] |
|---|---|---|---|---|---|
| | [$\mu$] | [$\mu$] | [%] | [%] | |
| Reihe 1 | | | | | |
| 1 | 25,00 | 25,00 | 25,00 | 34,80 | 2,60 |
| 2 | 40,00 | 25,00 | 37,87 | 46,21 | 4,67 |
| 3 | 50,00 | 28,00 | 41,09 | 49,20 | 3,67 |
| 4 | 70,00 | 25,00 | 54,29 | 61,44 | 1,98 |
| 5 | 100,00 | 25,00 | 64,00 | 70,44 | 1,34 |
| 6 | 150,00 | 25,00 | 73,47 | 79,23 | 0,82 |
| 7 | 200,00 | 25,00 | 79,01 | 84,37 | 0,41 |
| | | | | | |
| Reihe 2 | | | | | |
| 8 | 40,00 | 15,00 | 52,89 | 56,65 | 5,92 |
| 9 | 40,00 | 18,00 | 47,56 | 55,20 | 5,63 |
| 10 | 40,00 | 23,00 | 40,31 | 48,50 | 4,89 |
| 11 | 40,00 | 25,00 | 37,87 | 47,60 | 4,67 |
| 12 | 40,00 | 28,00 | 34,60 | 43,30 | 3,49 |
| 13 | 40,00 | 36,00 | 27,70 | 37,50 | 2,26 |
| | | | | | |
| Reihe 3 | | | | | |
| 14 | 40,00 | 18,00 | 47,56 | 55,20 | 7,19 |
| 15 | 40,00 | 25,00 | 37,87 | 46,21 | 5,73 |
| 16 | 40,00 | 36,00 | 27,70 | 36,78 | 3,12 |
| 17 | 50,00 | 28,00 | 41,09 | 49,20 | 5,83 |

(fortgesetzt)

| Beispiel | Maschenweite | $d_{Draht}$ | offene Fläche | T | $L_{100\ V}$ [cd/m$^2$] |
|---|---|---|---|---|---|
| | [μ] | [μ] | [%] | [%] | |
| 18 | 200,00 | 25,00 | 79,01 | 84,36 | 8,21 |
| | | | | | |
| Vergleichsbeispiel Reihe 4 | | | | | |
| 19 | ITO OC50 | 175 μ PET | 100,00 | 100,00 | 12,57 |

## Herstellung der Reihe 3

Die Herstellung der Lampe erfolgt entsprechend den Reihen 1 bis 2 sowie der vorstehend beschriebenen Laminierung. Nach dem letzten Arbeitsschritt, dem Aufbringen des Metallgewebes, wird mit einer Drahtrakel eine 4 Gew.-%ige Baytron FE-Lösung auf die Oberfläche der Lampe gestrichen. Die Naßfilmdicke beträgt 10 μm. Die Lampe wird 10 Minuten bei 110 °C im Trockenofen getrocknet.

Anhand der in Figur 3 dargestellten Kurve ist zu erkennen, dass die Maschenweite einen signifikanten Einfluss auf die Leuchtdichte der Lampen hat. Ohne Baytronbeschichtung liegt das Optimum zwischen 20 und 60 μm. Bei zu niedriger Maschenweite sinkt die Transmission zu stark ab, weil der Drahtdurchmesser im Vergleich zur offenen Fläche zu dick wird. Dieser Effekt kompensiert den Leuchtdichtezuwachs durch das immer homogener werdende elektrische Feld.

Anhand der Figur 4 ist zu erkennen, dass im Falle der Ausfüllung der Gitterzwischenräume beziehungsweise Maschenzwischenräume mit Baytron® der Effekt, dass sich die Inhomogenität des Feldes mit zunehmender Maschenweite vergrößert und die Leuchtdichte damit abnimmt, abgeschwächt wird. Das Baytron überbrückt die ursprünglich vorhandenen Inhomogenitäten und ermöglicht auch große Maschenweiten mit höherer Leuchtdichte.

## Prägeversuche der Flächenelemente (EL-Lampen)

Mit den hergestellten Flächenelementen (Lampen) wurden entsprechend der DIN 74069 Prägeversuche durchgeführt. Eine Lampe der Fläche 60 mm x 80 mm wurde auf einer 1 mm dicken Aluminiumplatine aufgebracht und im kalten Zustand mit einem Prägewerkzeug 10 Sekunden lang geprägt. Für die Versuche wurde ein großes B der Ausmaße 46 mm x 72 mm und der Prägetiefe von 2 mm verwendet. In Figur 5 ist die Skizze des Prägewerkzeuges dargestellt, wobei A4 einen Ausschnitt der Oberfläche der unteren Prägebacke und A3 einen Ausschnitt der Oberfläche der der oberen Prägebacke im Querschnitt darstellt. Der Ausschnitt zeigt eine der Linien, die Bestandteil des Buchstaben B sind.

## Geräteliste und Messbedingungen

### Tabelle 3: Geräte zur Leuchtdichtebestimmung

| Gerät | Hersteller | Typ |
|---|---|---|
| Spannungsquelle Leuchtdichtemessgerät | HBS Electronic GmbH Gossen | ACS-Power-Source Mavo-Monitur *UBS* |

### Tabelle 4: Geräte zur Lampenherstellung

| Gerät | Hersteller | Typ |
|---|---|---|
| Laminiergerät | ibico | pouchMaster 18pro |

## Haze- und Transmissionsmessungen

Die Werte für Transmission und Haze wurden an einem Hazegard Plus der Firma Byk Gardner gemessen. Die Proben wurden senkrecht durchstrahlt und das durchgelassene Licht in einer integrierenden Kugel (Ulbrichtkugel) auf fotoelektrischem Wege gemessen. Die spektrale Empfindlichkeit ist an die CIE-Normspektralwertfunktion Y unter Normlicht C angepasst.

**Bezugszeichenliste:**

0 Flächenelement
1 Elektrode, hier: Gewebe (up-side-down)
2 Leuchtschicht
3 Rückelektrode
4 Grundkörper
5 Kennzeichenschild
6 Trennschicht (Trennpapier; TP)
7 Laminiergerät
8 Transfertape
9 ITO

**Patentansprüche**

1. Flächenelement (0), umfassend die Schichtabfolge Frontelektrode (1), Leuchtschicht (2) mit einer Matrix mit Leuchtpartikeln, die unter Einwirkung eines elektrischen Wechselspannungsfeldes lumineszieren, Rückelektrode (3) sowie gegebenenfalls mindestens einer dielektrischen Schicht, wobei die Matrix und/oder die dielektrische Schicht ein Dielektrikum enthalten,
   **dadurch gekennzeichnet, dass**.
   die Frontelektrode (1) eine flächige, zumindest teilweise transparente, tiefziehfähige Elektrode ist, die ein flächiges Element mit einem elektrisch leitenden Material umfasst, wobei
   das elektrisch leitende Material des Elements bei Raumtemperatur (20 bis 25 °C) eine Reißdehnung zwischen 1 und 70 % oder auch über 70 % und ein Zugfestigkeit zwischen 5 bis 2500 N/mm$^2$ aufweist und
   das flächige Element ein flächiges Gitternetz mit mindestens einem elektrisch leitenden Filament des Materials ist, wobei
   die Filamente oder Drähte einen Durchmesser von 2 bis 40 $\mu$m aufweisen der Gitternetzabstand der Filamente oder Drähte im Gitternetz einer Maschenweite von 1 bis 500 $\mu$m entspricht oder,
   wenn in den Gitternetzzwischenräumen des Gitternetzes eine organische, flexible und gegebenenfalls leitfähige Polymermasse enthalten ist, das Gitternetz eine Maschenweite von 50 $\mu$m bis 5000 $\mu$m aufweist,
   wobei in das Flächenelement (0) ein Motiv mit einer Prägehöhe C von 0,001 mm bis 10 mm geprägt ist.

2. Flächenelement nach Anspruch 1,
   **dadurch gekennzeichnet, dass**
   das Material bei Raumtemperatur eine Reißdehnung zwischen 10 bis 70 % und/oder eine Zugfestigkeit zwischen 50 bis 2100 N/mm$^2$ aufweist.

3. Flächenelement nach Anspruch 1,
   **dadurch gekennzeichnet**, das
   das elektrisch leitende Material des Elements aus mindestens einem Metall oder einer Legierung ist und das flächige Element ein flächiges Gitternetz eines tiefziehfähigen Gewebes mit einer glatten Bindung, Körperbindung oder Leinwandbindung mit mindestens einem elektrisch leitenden Filament des Materials umfasst.

4. Flächenelement nach einem der Ansprüche 1 bis 3,
   **dadurch gekennzeichnet, dass**
   die Frontelektrode (1) eine Transmission von 5 % bis 92 % im Bereich des UVNis-Spektralbereichs aufweist, insbesondere von 20 bis 85 %, vorzugsweise von 40 bis 85 %, bevorzugt von 50 bis 85 %, besonders bevorzugt von 50 bis 80% oder auch 50 bis 75 %.

5. Flächenelement nach einem der Ansprüche 1 oder 2,
   **dadurch gekennzeichnet, dass**
   das Gitternetz ein elektrisch leitendes Gewebe, ein elektrisch leitendes gewebtes Gitter oder ein aufdruckbares elektrisch leitendes Gitter mit im Wesentlichen regelmäßig parallel und/oder rechtwinklig oder mäanderförmig angeordneten, elektrisch leitendenden Filamenten umfasst.

6. Flächenelement nach einem der Ansprüche 1 bis 5,
   **dadurch gekennzeichnet, dass**
   das Gitternetz

   - ein Gewebe ist und Metall enthaltende, elektrisch leitende Drähte umfasst, die aus mindestens einem Metall oder einer Legierung sind, oder
   - ein Gewebe mit polymeren Filamenten ist und

     - die Filamente zumindest teilweise mit einer elektrisch leitenden Beschichtung versehen sind, die mindestens ein Metall, eine elektrisch leitende Legierung oder eine elektrisch leitende Polymermasse umfassen oder die Filamente selbst aus elektrisch leitenden Polymeren aufgebaut sind wie Polythiophenderivaten.

7. Flächenelement nach Anspruch 6,
   **dadurch gekennzeichnet, dass**
   die Polymermasse mindestens einen elektrisch leitenden Füllstoff aufweist, wobei der Füllstoff ausgewählt ist aus der Gruppe Metallpartikel, umfassend Silber, Gold, Platin, Aluminium und deren Legierungen, oder Graphit, Kohlenstoff-Nanoteilchen, Kohlenstoff-Nanoröhren, Ruß, Leitruß, Fullerene, Fulleren-Derivate und Acetylen-Ruß.

8. Flächenelement nach einem der Ansprüche 1 bis 7,
   **dadurch gekennzeichnet, dass**
   der Gitternetzabstand der Filamente oder Drähte im Gitternetz einer Maschenweite von 2 bis 220 $\mu$m, besonders zwischen 10 bis 75 $\mu$m oder
   wenn in den Gitternetzzwischenräumen des Gitternetzes eine organische, flexible und gegebenenfalls leitfähige Polymermasse enthalten ist, das Gitternetz eine Maschenweite 50 bis 2000 $\mu$m, bevorzugt 50 bis 500 $\mu$m aufweist.

9. Flächenelement nach einem der Ansprüche 1 bis 8,
   **dadurch gekennzeichnet, dass**
   die elektrisch leitenden Metalle, Metallpartikel und/oder die mindestens eines der Metalle enthaltende, elektrisch leitende Legierung mindestens eines der Metalle ausgewählt aus Aluminium, Kupfer, Eisen, Silber, Gold, Zink, Wolfram, Chrom, Blei, Titan, Nickel, Platin und/oder Gadolinium umfassen.

10. Flächenelement nach einem der Ansprüche 1 bis 9,
    **dadurch gekennzeichnet, dass**
    das aufdruckbare elektrisch leitende Gitter aus einer elektrisch leitenden Tinte, Lack oder Druckfarbe ist.

11. Flächenelement nach einem der Ansprüche 1 bis 10,
    **dadurch gekennzeichnet,**-dass
    die Filamente oder Drähte einen Durchmesser von 5 bis 40 $\mu$m aufweisen.

12. Flächenelement nach einem der Ansprüche 1 bis 11,
    **dadurch gekennzeichnet, dass**
    in den Gitternetzzwischenräumen des Gitternetzes eine organische, flexible und gegebenenfalls leitfähige Polymermasse enthalten ist.

13. Flächenelement nach zumindest einem der Ansprüche 1 bis 12,
    **dadurch gekennzeichnet, dass**
    die Leuchtpartikel ZnS, ZnSe, ZnS/CdS und/oder Phosphor enthalten oder eine Mischung mit mindestens einer dieser Verbindungen.

14. Flächenelement nach zumindest einem der Ansprüche 1 bis 13,
    **dadurch gekennzeichnet, dass**
    in den Gitternetzzwischenräumen des Gitternetzes eine organische, flexible und gegebenenfalls leitfähige Polymermasse enthalten ist.

15. Flächenelement nach zumindest einem der Ansprüche 1 bis 14,

**dadurch gekennzeichnet, dass**

es ein Schild, insbesondere ein Kennzeichenschild für Kraftfahrzeuge ist, und der Grundkörper (4) des Schildes zumindest teilweise die Rückelektrode (3) bildet oder das Flächenelement auf den Grundkörper (4) eines Schildes, insbesondere eines Kennzeichenschilds für Kraftfahrzeuge, aufgebracht ist.

16. Flächenelement nach zumindest einem der Ansprüche 1 bis 15,
**dadurch gekennzeichnet, dass**
es unter Anwendung von äußerem Druck ein-, zwei- oder dreidimensional plastisch verformbär ist und die Leuchtdichte; insbesondere einer geprägten Fläche (A) und/oder einer Hintergrundfläche (B); vor und nach der plastischen Verformung im Wesentlichen gleich ist.

**Claims**

1. Flat element (0) comprising the layer sequence front electrode (1), luminescent layer (2) with a matrix with luminescent particles which luminesce on exposure to an automating-voltage electrical field, back electrode (3), and also optionally at least one dielectric layer, where the matrix and/or the dielectric layer comprise(s) a dielectric,
**characterized in that**
the front electrode (1) is a flat, at least to some extent transparent, deep-drawable electrode which comprises a flat element with an electrically conductive material, where
the elongation at break of the electrically conductive material of the element at room temperature (from 20 to 25°C) is from 1 to 70%, or else above 70%, and its tensile strength is from 5 to 2500 N/mm$^2$ and
the flat element is a flat grid with at least one electrically conductive filament of the material, where
the diameter of the filaments or wires is from 2 to 40 $\mu$m,
the distance between the filaments or wires in the grid corresponds to a mesh width of from 1 to 500 $\mu$m or,
if there is an organic, flexible and optionally conductive polymer composition present in the interstices of the grid, the mesh width is from 50 $\mu$m to 5000 $\mu$m,
where a motif with embossment height C from 0.001 mm to 10 mm has been embossed into the flat element (0).

2. Flat element according to Claim 1, **characterized in that**
the elongation at break of the material at room temperature is from 10 to 70% and/or its tensile strength is from 50 to 2100 N/mm$^2$.

3. Flat element according to Claim 1, **characterized in that**
the electrically conductive material of the element is made of at least one metal or one alloy, and the flat element comprises a flat grid of a deep-drawable woven fabric with plain weave, twin-weave or canvas weave with at least one electrically conductive filament of the material.

4. Flat element according to any of Claims 1 to 3, **characterized in that**
the transmittance of the front electrode (1) in the UV/visible spectral region is from 5 to 92%, in particular from 20 to 85%, preferably from 40 to 85%, with preference from 50 to 85%, with particular preference from 50 to 80%, or else from 50 to 75%.

5. Flat element according to Claim 1 or 2, **characterized in that**
the grid comprises an electrically conductive woven fabric, an electrically conductive woven mesh or a printable electrically conductive mesh with electrically conductive filaments arranged in essence in regularly parallel and/or rectangular or undulating manner.

6. Flat element according to any of Claims 1 to 5, **characterized in that**
the grid

- is a woven fabric and comprises metal-containing, electrically conductive wires made of at least one metal or one alloy, or
- is a woven fabric with polymeric filaments and

- the filaments have been provided at least to some extent with an electrically conductive coating which comprises at least one metal, one electrically conductive alloy or one electrically conductive polymer composition, or the filaments themselves are composed of electrically conductive polymers such as polythiophene derivatives.

7. Flat element according to Claim 6, **characterized in that**
the polymer composition comprises at least one electrically conductive filler selected from the group of metal particles comprising silver, gold, platinum, aluminium and alloys of these, or graphite, carbon nanoparticles, carbon nanotubes, conductive carbon black or other carbon black, fullerenes, fullerene derivatives and acetylene black.

8. Flat element according to any of Claims 1 to 7, **characterized in that**
the distance between the filaments or wires in the grid corresponds to a mesh width of from 2 to 220 μm, particularly from 10 to 75 μm
or
if there is an organic, flexible and optionally conductive polymer composition present in the interstices of the grid, the mesh width of the grid is from 50 to 2000 μm, preferably from 50 to 500 μm.

9. Flat element according to any of Claims 1 to 8, **characterized in that**
the electrically conductive metals or metal particles and/or the at least one metal-containing, electrically conductive alloy comprise at least one of the metals selected from aluminium, copper, iron, silver, gold, zinc, tungsten, chromium, lead, titanium, nickel, platinum and/or gadolinium.

10. Flat element according to any of Claims 1 to 9, **characterized in that**
the printable electrically conductive mesh is made of an electrically conductive lacquer, printing ink or other ink.

11. Flat element according to any of Claims 1 to 10, **characterized in that**
the diameter of the filaments or wires is from 5 to 40 μm.

12. Flat element according to any of Claims 1 to 11, **characterized in that**
there is an organic, flexible and optionally conductive polymer composition present in the interstices of the grid.

13. Flat element according to at least one of Claims 1 to 12,
**characterized in that**
the luminescent particles comprise ZnS, ZnSe, ZnS/CdS and/or phosphorus or a mixture with at least one of these compounds.

14. Flat element according to at least one of Claims 1 to 13,
**characterized in that**
there is an organic, flexible and optionally conductive polymer composition present in the interstices of the grid.

15. Flat element according to at least one of Claims 1 to 14,
**characterized in that**
it is a number plate, in particular an identification number plate for motor vehicles, and the base (4) of the number plate at least to some extent forms the back electrode (3) or the flat element has been applied onto the base (4) of a number plate, in particular of an identification number plate for motor vehicles.

16. Flat element according to at least one of Claims 1 to 15,
**characterized in that**
it can be plastically deformed in one, two or three dimensions with use of external pressure and luminance, in particular of an embossed area (A) and/or of a background area (B), is in essence identical before and after plastic deformation.

**Revendications**

1. Élément plat (0), comprenant la succession de couches composée par une électrode avant (1), une couche luminescente (2) présentant une matrice contenant des particules luminescentes, qui sont luminescentes sous l'effet d'un champ électrique de tension alternative, une électrode arrière (3) ainsi que le cas échéant au moins une couche diélectrique, la matrice et/ou la couche diélectrique contenant un diélectrique, **caractérisé en ce que** l'électrode avant (1) est une électrode plate, au moins partiellement transparente, emboutissable, qui comprend un élément plat présentant un matériau électriquement conducteur, le matériau électriquement conducteur de l'élément présentant, à température ambiante (20 à 25°C), un allongement à la déchirure entre 1 et 70% ou également supérieur à 70% et une résistance à la traction entre 5 et 2500 N/mm$^2$, et l'élément plat étant une grille plate présentant au moins un filament électriquement conducteur du matériau, les filaments ou les fils présentant un diamètre de 2 à 40 $\mu$m, la distance entre les filaments ou les fils dans la grille correspondant à une largeur de maille de 1 à 500 $\mu$m ou, lorsque les espaces intermédiaires de la grille contiennent une masse polymère organique, souple et le cas échéant conductrice, la grille présentant une largeur de maille de 50 $\mu$m à 5000 $\mu$m, un motif présentant une hauteur d'emboutissage C de 0,001 mm à 10 mm étant embouti dans l'élément plat (0).

2. Élément plat selon la revendication 1, **caractérisé en ce que** le matériau présente, à température ambiante, un allongement à la déchirure entre 10 et 70% et/ou une résistance à la traction entre 50 et 2100 N/mm$^2$.

3. Élément plat selon la revendication 1, **caractérisé en ce que** le matériau électriquement conducteur de l'élément est constitué par au moins un métal ou un alliage et l'élément plat comprend une grille plate d'un tissu emboutissable présentant une armure lisse, une armure sergé ou une armure toile présentant au moins un filament électriquement conducteur du matériau.

4. Élément plat selon l'une quelconque des revendications 1 à 3, **caractérisé en ce que** l'électrode avant (1) présente une transmission de 5% à 92% dans la zone de la plage spectrale de l'UV/Vis, en particulier de 20 à 85%, de préférence de 40 à 85%, de préférence de 50 à 85%, de manière particulièrement préférée de 50 à 80% ou également de 50 à 75%.

5. Élément plat selon l'une quelconque des revendications 1 à 2, **caractérisé en ce que** la grille comprend un tissu électriquement conducteur, un treillis tissé électriquement conducteur ou un treillis électriquement conducteur pouvant être imprimé présentant des filaments électriquement conducteurs, disposés de manière parallèle et/ou perpendiculaire ou sous forme de méandres, de manière essentiellement régulière.

6. Élément plat selon l'une quelconque des revendications 1 à 5, **caractérisé en ce que** la grille

- est un tissu et comprend des fils électriquement conducteurs contenant du métal, qui sont en au moins un métal ou un alliage ou
- est un tissu présentant des filaments polymères et
- les filaments sont pourvus au moins partiellement d'un revêtement électriquement conducteur, qui comprend au moins un métal, un alliage électriquement conducteur ou une masse polymère électriquement conductrice ou les filaments eux-mêmes sont constitués de polymères électriquement conducteurs, tels que des dérivés de polythiophène.

7. Élément plat selon la revendication 6, **caractérisé en ce que** la masse polymère présente au moins une charge électriquement conductrice, la charge étant choisie dans le groupe formé par les particules métalliques, comprenant l'argent, l'or, le platine, l'aluminium et leurs alliages, ou le graphite, les nanoparticules de carbone, les nanotubes de carbone, la suie, la suie conductrice, les fullerènes, les dérivés de fullerène et la suie d'acétylène.

8. Élément plat selon l'une quelconque des revendications 1 à 7, **caractérisé en ce que** la distance entre les filaments ou les fils dans la grille présente une largeur de maille de 2 à 220 $\mu$m, en particulier entre 10 et 75 $\mu$m ou, lorsqu'une masse polymère organique, souple et le cas échéant conductrice est contenue dans les espaces intermédiaires de la grille, la grille présente une largeur de maille de 50 à 2000 $\mu$m, de préférence de 50 à 500 $\mu$m.

9. Élément plat selon l'une quelconque des revendications 1 à 8, **caractérisé en ce que** les métaux électriquement conducteurs, les particules métalliques électriquement conductrices et/ou l'alliage électriquement conducteur contenant au moins un des métaux, comprennent au moins un des métaux choisis parmi l'aluminium, le cuivre, le fer, l'argent, l'or, le zinc, le tungstène, le chrome, le plomb, le titane, le nickel, le platine et/ou le gadolinium.

10. Élément plat selon l'une quelconque des revendications 1 à 9, **caractérisé en ce que** le treillis électriquement conducteur pouvant être imprimé est constitué par une encre, une laque ou une encre d'impression électriquement conductrices.

11. Élément plat selon l'une quelconque des revendications 1 à 10, **caractérisé en ce que** les filaments ou les fils présentent un diamètre de 5 à 40 $\mu$m.

**12.** Élément plat selon l'une quelconque des revendications 1 à 11, **caractérisé en ce qu'**une masse polymère organique, souple et le cas échéant conductrice est contenue dans les espaces intermédiaires de la grille.

**13.** Élément plat selon l'une quelconque des revendications 1 à 12, **caractérisé en ce que** les parties luminescentes contiennent du ZnS, du ZnSe, du ZnS/CdS et/ou du phosphore ou un mélange présentant au moins un de ces composés.

**14.** Élément plat selon l'une quelconque des revendications 1 à 13, **caractérisé en ce qu'**une masse polymère organique, souple et le cas échéant conductrice est contenue dans les espaces intermédiaires de la grille.

**15.** Élément plat selon l'une quelconque des revendications 1 à 14, **caractérisé en ce qu'**il s'agit d'une plaque, en particulier d'une plaque signalétique pour des véhicules automobiles, et le corps de base (4) de la plaque forme au moins partiellement l'électrode arrière (3) ou l'élément plat est appliqué sur le corps de base (4) d'une plaque, en particulier d'une plaque signalétique pour des véhicules automobiles.

**16.** Élément plat selon l'une quelconque des revendications 1 à 15, **caractérisé en ce que** qu'il est plastiquement déformable sous l'effet d'une pression externe dans une, deux ou trois dimensions et la densité de luminescence, en particulier d'une surface emboutie (A) et/ou d'une surface de base arrière (B), est essentiellement la même avant et après la déformation plastique.

Figur 1

Figur 2a

**Figur 2b**

**Figur 3**

Figur 4

0.5

14.0

A3

2.0

A2

A1

A4

1.6

0.5

12.8

# Figur 5

5

0

4

# Figur 6

Figur 7

Figur 8

Figur 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006045514 A1
- DE 19827477 A1
- DE 20022563 U
- DE 10247708 B4
- WO 2005062679 A1
- WO 9748254 A1
- DE 2948350 A1
- US 7592389 B2
- EP 0673042 B1
- EP 0324842 A1
- US 2009039781 A1
- US 6582628 B2
- WO 2003054981 A1
- WO 2007107591 A1

- DE 102008062129 A1
- DE 102006013834 A1
- US 6765078 B2
- DE 10036901 A1
- US 2004092685 A1
- EP 0824111 A1
- EP 0826698 A1
- EP 0824110 A1
- EP 0841346 A1
- EP 0850957 A1
- US 5945491 A
- US 5854364 A
- US 5789487 A

**In der Beschreibung aufgeführte Nicht-Patentliteratur**

- **VON DONATAS SATAS.** Handbook of Pressure Sensitive Adhesive Technology. van Nostrand, 444-514

- **T.G. FOX.** Analogie zur Fox-Gleichung. Bull. Am. Phys. Soc, 1956, vol. 1, 123